# EUROPÄISCHE PATENTSCHRIFT

(11) **EP 4 310 060 B1**
(45) Veröffentlichungstag und Bekanntmachung des Hinweises auf die Patenterteilung: **30.10.2024**
(21) Anmeldenummer: 22186404.4
(22) Anmeldetag: 22.07.2022
(51) Int. Cl.: C03B 19/14, C03B 23/047, C03B 23/049, C03B 32/00

(54) **VERFAHREN ZUR OPTIMIERUNG VON TITANDIOXIDVERLÄUFEN IN MASSIVEN TIO2-SIO2-SUBSTRATVORLÄUFERN**
METHOD FOR OPTIMIZING TITANIA DISTRIBUTION IN SOLID TIO2-SIO2 SUBSTRATE PRECURSORS
PROCÉDÉ D'OPTIMISATION DE LA DISTRIBUTION D'OXYDE DE TITANE DANS DES PRÉCURSEURS DE SUBSTRATS DE TIO2-SIO2 SOLIDES

(43) Veröffentlichungstag der Anmeldung: 24.01.2024
(73) Patentinhaber: Heraeus Quarzglas GmbH & Co. KG, 63450 Hanau (DE)
(72) Erfinder: BECKER, Klaus, 63450 Hanau (DE)
(74) Vertreter: Heraeus IP

(56) Entgegenhaltungen:
- JP-A- 2006 240 979

## Beschreibung

### Hintergrund der Erfindung

Die Erfindung betrifft ein Verfahren zur Herstellung eines Substratvorläufers mit einer Masse von mehr als 50 kg, insbesondere mehr als 100 kg, aufweisend ein TiO2-SiO2-Mischglas.

### Stand der Technik

Die EP2960219A1 beschreibt, dass bei der EUV-Lithographie mittels mikrolithographischer Projektionsgeräte hochintegrierte Strukturen mit einer Linienbreite von weniger als 50 nm erzeugt werden. Dabei wird typischerweise Arbeitsstrahlung aus dem Spektralbereich zwischen 10 nm und 121 nm eingesetzt, der als EUV-Bereich bezeichnet wird (Extreme Ultraviolet light, auch als "weiche Röntgenstrahlung" bekannt).

Die Projektionsgeräte sind mit Spiegelelementen ausgestattet, die im Wesentlichen aus synthetischem, hochkieselsäurehaltigem und mit Titandioxid dotiertem Quarzglas (im Folgenden auch als "TiO2-SiO2-Mischglas" oder "TiO2-SiO2-Glas" bezeichnet) bestehen und mit einem reflektierenden Schichtsystem versehen sind. Das TiO2-SiO2-Mischglas zeichnet sich durch einen extrem niedrigen thermischen Ausdehnungskoeffizienten aus (Coefficient of Thermal Expansion, im Folgenden auch als "CTE" bezeichnet). Bei CTE handelt es sich um eine Glaseigenschaft, die von der thermischen Historie des Glases und einigen anderen Parametern abhängt, in erster Linie aber von der Titandioxid-Konzentration.

Der Substratvorläufer aus TiO2-SiO2-Mischglas wird mechanisch zu dem Spiegelsubstrat bearbeitet und zur Bildung eines Spiegelelements verspiegelt.

Durch die permanent steigenden Anforderungen an die zu erreichenden Linienbreiten steigen auch die Anforderungen an das TiO2-SiO2-Mischglas. Zum Erzielen der kleineren Linienbreiten wird häufig die EUV-Quellleistungen erhöht. Diese Erhöhung der EUV-Leistung führt zum einen zu einem höheren Durchsatz der Stepper, aber bedingt auch eine stärkere Erwärmung der Spiegel. Folglich bedarf es Spiegeln, die immer homogener und definierter werden, da sonst mit den Quellleistungen die Abbildungsfehler zunehmen.

Zudem erfordern immer kleiner werdende Strukturbreiten per se bessere Abbildungseigenschaften. Ein besonderer Stellenwert kommt dabei der numerischen Apertur zu. Der optische Öffnungswinkel des Spiegelobjektivs hängt direkt mit der optischen Auflösung zusammen. Eine höhere numerische Apertur (also ein höherer Strahlenwinkel) erlaubt eine bessere Auflösung. Dies erfordert aber größere Spiegelsubstrate.

Herstellungsbedingt weist TiO2-SiO2-Mischglas eine mikroskopische Schichtstruktur auf. Die JP2006240979A beschreibt ein Verfahren zur Reduzierung dieser Schichtstruktur. Als nachteilig hat sich herausgestellt, dass bei der Herstellung eines Substratvorläufers mit einer angestrebten Masse von mehr als 100 kg neben den mikroskopischen, herstellungsbedingten Schichtstrukturen auch ein makroskopischer, herstellungsbedingter Titanverlauf auftritt. Dieser herstellungsbedingte Titanverlauf beeinflusst die Qualität des finalen Substratvorläufers und wird nicht mit den bekannten Verfahren beseitigt.

### Technische Aufgabenstellung

Allgemein ist es eine Aufgabe der vorliegenden Erfindung, einen Nachteil, der sich aus dem Stand der Technik ergibt, zumindest teilweise zu überwinden. Eine weitere Aufgabe der Erfindung ist es, einen Substratvorläufer bereitzustellen, bei dem die Einflüsse der makroskopischen, herstellungsbedingten Titanverläufe reduziert werden. Ferner besteht eine Aufgabe der Erfindung darin, einen Substratvorläufer bereitzustellen, bei dem die Einflüsse der makroskopischen, herstellungsbedingten Eigenschaftsverläufe reduziert werden. Ferner besteht eine Aufgabe der Erfindung darin, einen Substratvorläufer mit einer Masse von mehr als 50 kg, insbesondere mehr als 100 kg bereitzustellen, mit dem eine hohe numerische Apertur erreicht wird.

### Bevorzugte Ausführungsformen der Erfindung

Ein Beitrag zur mindestens teilweisen Erfüllung mindestens einer der zuvor genannten Aufgaben wird durch die Merkmale der unabhängigen Ansprüche geleistet. Die abhängigen Ansprüche stellen bevorzugte Ausführungsformen bereit, die zur mindestens teilweisen Erfüllung mindestens einer der Aufgaben beitragen.

In der vorliegenden Beschreibung beinhalten Bereichsangaben auch die als Grenzen genannten Werte. Eine Angabe der Art "im Bereich von X bis Y" in Bezug auf eine Größe A bedeutet folglich, dass A die Werte X, Y und Werte zwischen X und Y annehmen kann. Einseitig begrenzte Bereiche der Art "bis zu Y" für eine Größe A bedeuten entsprechend als Wert Y und kleiner als Y.

Einige der beschriebenen Merkmale sind mit dem Begriff "im Wesentlichen" verknüpft. Der Begriff "im Wesentlichen" ist so zu verstehen, dass unter realen Bedingungen und Fertigungstechniken eine mathematisch exakte Auslegung von Begrifflichkeiten wie "Überlagerung", "senkrecht", "Durchmesser" oder "Parallelität" nie wörtlich, sondern nur innerhalb gewisser fertigungstechnischer Fehlertoleranzen gegeben sein kann. Insbesondere kann unter dem Begriff "im Wesentlichen" eine Variation von +/- 5 % des entsprechenden Wertes verstanden werden. Insbesondere schließen "im Wesentlichen parallele Achsen" einen Winkel von -5 Grad bis 5 Grad zueinander ein und "im Wesentlichen gleiche Volumen" umfassen eine Abweichung von bis zu 5 Volumen-%. Eine "im Wesentlichen aus Quarzglas bestehende Vorrichtung" umfasst beispielsweise einen Quarzglasanteil von ≥ 95 bis ≤ 100 Gewichts-%. Weiterhin schließt "im Wesentlichen rechtwinklig" einen Winkel von 85 Grad bis 95 Grad ein.

### Ausführliche Beschreibung

Die Erfindung betrifft ein Verfahren zur Herstellung eines Substratvorläufers mit einer Masse von mehr als 50 kg, aufweisend ein TiO2-SiO2-Mischglas umfassend die Schritte:
- Einbringen eines Siliziumdioxid-Rohmaterials und eines Titandioxid-Rohmaterials in eine Flamme,
- Herstellen eines Glaskörpers mit einem Titandioxidgehalt von 3 Gew.-% bis zu 10 Gew.-%, wobei der Glaskörper:
   ∘ einen makroskopischen, herstellungsbedingten Titanverlauf aufweist, und
   ∘ eine mikroskopische, herstellungsbedingte Schichtstruktur aufweist,
- Aufteilen des Glaskörpers in eine Mehrzahl von stangenartigen Glaskörperabschnitten,
- Räumliches Vermessen des Titanverlaufs in jedem der Glaskörperabschnitte,
- Verbinden der Glaskörperabschnitte zur Bildung eines länglichen ersten Glasbauteils,
- Erste Homogenisierungsbehandlung des ersten Glasbauteils,
- Zusammenschieben des ersten Glasbauteils, um ein kugelförmiges Glassystem zu erstellen,
- Wenden des Glassystems um mehr als 70 Grad,
- Auseinanderziehen des Glassystems zur Bildung eines länglichen zweiten Glasbauteils,
- Zweite Homogenisierungsbehandlung des zweiten Glasbauteils, um einen Substratvorläufer zu erstellen, wobei der Substratvorläufer im Wesentlichen schichtstrukturfrei ist,

Zur Überwindung der oben genannten Nachteile im Stand der Technik ist erfindungsgemäß vorgesehen, dass der Schritt Vermessen folgende Schritte umfasst:
- Vorbestimmen einer anzustrebenden, räumlichen Titanverteilung in dem Substratvorläufer,
- Bereitstellen eines Modells einer Titanaufteilung in dem Substratvorläufer, wobei das Modell abhängig ist von
   ∘ einer Anordnung der Mehrzahl der Glaskörperabschnitte in dem ersten Glasbauteil zueinander,
   ∘ dem räumlichen Titanverlauf in jedem der Glaskörperabschnitte, und
   ∘ den Auswirkungen des Schritts Zusammenschieben und des Schritts Wenden auf die räumlichen Titanverläufe in den Glaskörperabschnitten,
- Berechnen einer optimalen Anordnung der Glaskörperabschnitte zueinander mittels des Modells, so dass eine Differenz zwischen Titanaufteilung und Titanverteilung minimal ist,
- Positionieren der Glaskörperabschnitte, so dass in Schritt Verbinden die Glaskörperabschnitte gemäß der berechneten optimalen Anordnung verbunden werden.

Im Rahmen des beschriebenen Verfahrens geht es um die Optimierung einer räumlichen Verteilung von Titandioxid, insbesondere von Titandioxid und wenigstens einer anderen Eigenschaft in einem Substratvorläufer. Aus sprachlichen Gründen wird im Folgenden der Begriff "Titan" und "Titandioxid" synonym verwendet. Tatsächlich bezieht sich die Erfindung sowie die angegebenen werden nicht auf das elementare Titan sondern seine oxidierte Form Titandioxid. Weiterhin finden folgende Wortendungen Verwendung, um die räumlichen Verteilungen von Titandioxid und/oder wenigstens einer anderen physikalischen oder chemischen Eigenschaft in den unterschiedlichen Stufen des Verfahrens zu benennen:
- im Glaskörper und im Glaskörperabschnitt die Wortendung "verlauf",
- im Substratvorläufer die Wortendung "häufigkeit",
- im Modell die Wortendung "aufteilung", und
- im angestrebten Substratvorläufer die Wortendung "verteilung".

Insofern unterscheidet sich beispielhaft ein Titanverlauf von einer Titanhäufigkeit, dass
- der erste einen Titandioxidgehalt an räumlich unterschiedlichen Punkten innerhalb eines Glaskörpers bezeichnet und
- der zweite einen Titandioxidgehalt an räumlich unterschiedlichen Punkten innerhalb eines Substratvorläufers bezeichnet.

Das Verfahren ermöglicht die Herstellung von Substratvorläufern mit einer Masse von mehr als 50 kg, insbesondere mehr als 100 kg, welche die stetig wachsenden Anforderungen an EUV-Spiegelelemente erfüllen. Dabei umfasst das Verfahren die folgenden Schritte:

### Einbringen

Im Schritt Einbringen wird Siliziumdioxid-Rohmaterials (z.B. SiCl4- oder OMCTS-Dampf) und ein Titandioxid-Rohmaterial (z.B. TiCl4- oder Ti-Alkoxiddampf) einer Flammenhydrolyse unterzogen. Dabei entstehen SiO2- und TiO2-Partikel.

### Herstellen

Die im Rahmen der Flammenhydrolyse entstehenden SiO2- und TiO2-Partikel können auf zwei Arten abgeschieden werden. Bei der Direktabscheidung (DQ-Verfahren) erfolgt ein Abscheiden auf einen unterhalb der Flamme positionierten Stempel. In der Regel werden die Temperaturverhältnisse so gewählt, dass dieses Abscheiden unter Bildung eines kompakten TiO2-SiO2-Mischglases erfolgt. Beim axialen Dampfphasenabscheidungsverfahren (VAD-Verfahren) erfolgt das Abscheiden in Form eines Films von SiO2- und TiO2-Partikeln auf einer Trägerstange. Anschließend erfolgt in einem zweiten Schritt ein Verglasen der Partikel zu einem TiO2-SiO2-Mischglas.

Das Ergebnis dieses Schrittes ist ein Glaskörper mit einem Titandioxidgehalt von 3 Gewichtsprozent (Gew.-%) bis zu 10 Gewichtsprozent (Gew.-%) TiO2, der eine mikroskopische, herstellungsbedingte Schichtstruktur - auch als kurzwellige Schichtstruktur bezeichnet - aufweist, die sich aus dem schichtartigen Abscheiden der SiO2- und TiO2-Partikel ergibt.

Die hier sowie im Folgenden angegebenen Massen beziehen sich immer auf die Menge an TiO2 (Titandioxid), nicht dem elementaren Titan.

Aufgrund von Schwankungen in den Massendurchflussreglern (auch Mass-Flow-Controller, MFC), mechanischen Ungenauigkeiten der Brenner oder der Halterungen der Brenner- und Abscheidesysteme oderstochastisch und/oder deterministisch variierende thermischen Randbedingungen beim Aufbau weisen Glaskörper, die Eigengewichte von mehr als 50 kg, insbesondere mehr als 100 kg, insbesondere mehr als 200 kg besitzen, neben der beschriebenen mikroskopischen, herstellungsbedingten Schichtstruktur auch einen makroskopischen, herstellungsbedingten Titanverlauf auf. Die kurzwellige Schichtstruktur besitzt eine Größe von weniger als 1 mm, insbesondere weniger als 0,5 mm.

Dieser makroskopische Titanverlauf - auch als langwellige Schwankungen oder langwelliger Titanverlauf bezeichnet - weist spezifische Schwankungslängen von 0,15 m bis 0,75 m, insbesondere 0,17 m bis 0,5 m auf, in der der Titandioxidgehalt um maximal 0,5 Gew.-%, insbesondere maximal 0,3 Gew.-%, insbesondere zwischen 0,02 Gew.-% bis 0,25 Gew.-%, insbesondere zwischen 0,05 Gew.-% bis 0,2 Gew.-% schwankt. In einem beispielhaften Glaskörper mit einer Länge von einem Meter und einem Titandioxidgehalt von 10 Gew.-% und einer makroskopischen, herstellungsbedingten Schwankung von +/- 0,5 Gew.-%, kann der Titandioxidgehalt somit räumlich, insbesondere mehrfach, zwischen 10, 5 Gew.-% und 9,5 Gew.-% schwanken.

### Aufteilen

Die im Schritt Herstellung erstellten Glaskörper können eine zylinder-, stangen- oder rohrartige Form aufweisen. Entlang einer vorgegebenen Längsachse erfolgt ein Aufteilen des Glaskörpers in eine Mehrzahl von stangenartigen Glaskörperabschnitten.

### Vermessen

Im Schritt Vermessen erfolgt an mehreren räumlich unterschiedlichen Punkten die Bestimmung des Titandioxidgehalts. So wird für jeden der im Schritt Aufteilen erstellten Glaskörperabschnitte ein individueller Titanverlauf ermittelt. Dazu wird entlang einer Längsachse des Glaskörperabschnitts der Gehalt an Titandioxid und/oder einer Eigenschaft vermessen. Die Messpunkte haben dabei eine Distanz von weniger als 5 cm, insbesondere weniger als 2 cm zueinander. Die Messgenauigkeit bei der Bestimmung des Gehalts an Titandioxid beträgt 0,005 Gew.-%.

### Verbinden

Eine Mehrzahl von Glaskörperabschnitten wird im Schritt Verbinden miteinander verbunden, um ein längliches erstes Glasbauteil zu bilden. Das Verbinden kann dabei insbesondere stoffschlüssig im Rahmen eines Heißprozesses erfolgen. Unter dem Begriff Heißprozess wird ein Verfahrensschritt verstanden, bei dem die Temperatur eines Elements durch Wärmeeintrag erhöht wird. Beispiele für Heißprozesse:
- Flammenbasierte Heißprozesse basieren auf der Oxydation eines exotherm reagierenden Gases. Ein Beispiel ist die Nutzung von Wasserstoff - auch als "H2" bezeichnet - als Brenngas (die Flammenhydrolyse). Es reagiert mit dem Sauerstoff - auch als "O2" bezeichnet - in der Luft.
- Flammenfreie Heißprozesse nutzen andere sich erwärmende Systeme, die keine offene Flamme benötigen. Ein Beispiel ist die Nutzung eines Widerstands, der elektrische Energie in thermische Energie (Wärme) umwandelt.

### Erste Homogenisierungsbehandlung

In einer ersten Homogenisierungsbehandlung werden die kurzwelligen, mikroskopischen Schichtstrukturen des ersten Glasbauteils in einer Ebene in einem tiegelfreien Schmelzverfahren beseitigt. Dazu kann das erste Glasbauteil in die Spannfutter einer Glasdrehbank eingespannt und zonenweise erweicht werden, wobei gleichzeitig die Spannfutter mit unterschiedlichen Geschwindigkeiten oder gegenläufig um eine Rotationsachse rotieren. Durch die unterschiedliche Rotation des ersten Glasbauteils beiderseits der Erweichungszone kommt es dort zu Torsion (Verdrillen) und damit zu mechanischer Durchmischung im Glasvolumen. Der Bereich der thermisch-mechanischen Durchmischung wird auch als "Scherzone" bezeichnet. Die Scherzone weist eine Länge von 2 cm bis 8 cm auf, was mehr als eine Größenordnung länger als die Länge der kurzwelligen Schichtstrukturen ist, die Längen von weniger als 1 mm aufweisen. Die Scherzone wird entlang einer Längsachse des ersten Glasbauteils verschoben und dieses dabei über seine Länge durchmischt. Mikroskopische, herstellungsbedingte Schichtstrukturen werden so in einer Ebene, insbesondere der Ebene der Scherzone, verringert oder beseitigt.

Wird das TiO2-SiO2-Mischglas, welches eine Homogenisierungsbehandlung durchlaufen hat, mittels Spannungsdetektor und Interferometer untersucht, zeigt sich, dass die optische Schichtstrukturfreiheit parallel zu der während der Homogenisierung verwendeten Ebene der Scherzone niedriger ist als die senkrecht zu der Ebene der Scherzone beobachtete Schichtstrukturfreiheit. Dies zeigt, dass der in der Scherzone genutzte Mischeffekt, welcher der Erzielung der Schichtstrukturfreiheit dient, senkrecht zu der während der Homogenisierungsbehandlung verwendeten Rotationsachse niedriger ist als der entlang der Rotationsachse beobachtete Mischeffekt.

### Zusammenschieben

Nach der ersten Homogenisierungsbehandlung wird das erste Glasbauteil thermisch erhitzt und mechanisch zusammengeschoben. Durch das Zusammenschieben beider Enden entlang der Längsachse des ersten Glasbauteils wird ein kugelförmiges Glassystem erstellt.

### Wenden

Relativ zu der Längsachse des ersten Glasbauteils wird das kugelförmige Glassystem um mehr als 70 Grad gewendet. Der Winkel des Wendens kann insbesondere zwischen 70 und 110 Grad, insbesondere zwischen 80 und 100 Grad betragen.

### Auseinanderziehen

Nach dem Wenden wird das Glassystem thermisch erhitzt, um ein longitudinales Auseinanderziehen zu möglichen. Dies ermöglicht ein Umformen des kugelförmigen Glassystems in ein längliches, insbesondere stabartiges zweites Glasbauteil.

### Zweite Homogenisierungsbehandlung

Um verbleibende mikroskopische, herstellungsbedingte Schichtstrukturen zu beseitigen, erfolgt eine zweite Homogenisierungsbehandlung des zweiten Glasbauteils. Die zweite Homogenisierungsbehandlung erfolgt analog der ersten Homogenisierungsbehandlung. Dazu kann das zweite Glasbauteil in Spannfutter der Glasdrehbank eingespannt und zonenweise erweicht werden, wobei gleichzeitig die Spannfutter mit unterschiedlichen Geschwindigkeiten oder gegenläufig um eine Rotationsachse rotieren. Durch die unterschiedliche Rotation des zweiten Glasbauteils beiderseits der Erweichungszone kommt es wieder zu einer Torsion (Verdrillen) und damit zu mechanischer Durchmischung im Glasvolumen. Die Scherzone wird entlang einer zweiten Länge des zweiten Glasbauteils verschoben und dieses dabei über seine Länge umgeformt und durchmischt. Mikroskopische, herstellungsbedingte Schichtstrukturen werden so in einer Ebene, insbesondere der Ebene der Scherzone, verringert oder beseitigt.

Wird das TiO2-SiO2-Mischglas, welches beide Homogenisierungsbehandlungen durchlaufen hat, mittels Spannungsdetektor und Interferometer untersucht, zeigt sich, dass die mikroskopischen, herstellungsbedingten Schichtstrukturen im Wesentlichen, insbesondere zu mindestens 99 % gegenüber dem Glaskörper, entfernt wurden.

Im Ergebnis der zweiten Homogenisierungsbehandlung des zweiten Glasbauteils wird ein Substratvorläufer erstellt, der im Wesentlichen frei von mikroskopischen, herstellungsbedingten Schichtstrukturen ist.

In einer Ausführungsform ist das erste Glasbauteil und/oder das zweite Glasbauteil mit horizontal orientierter Längsachse in der Rotationseinrichtung eingespannt, wobei an die Enden des ersten Glasbauteils und/oder des zweiten Glasbauteils Halteelemente zur Minimierung der Verluste an Gutmaterial angeschweißt sein können.

### Erfindungsgemäßes Vermessen:

Zur Überwindung der oben genannten Nachteile im Stand der Technik ist vorgesehen, dass der Schritt Vermessen folgende Schritte umfasst:
   - Vorbestimmen einer anzustrebenden, räumlichen Titanverteilung in dem Substratvorläufer,
   - Bereitstellen eines Modells einer Titanaufteilung in dem Substratvorläufer, wobei das Modell abhängig ist von
      ∘ einer Anordnung der Mehrzahl der Glaskörperabschnitte in dem ersten Glasbauteil zueinander,
      ∘ dem räumlichen Titanverlauf in jedem der Glaskörperabschnitte, und
      ∘ den Auswirkungen des Schritts Zusammenschieben und des Schritts Wenden auf die räumlichen Titanverläufe in den Glaskörperabschnitten,
   - Berechnen einer optimalen Anordnung der Glaskörperabschnitte zueinander mittels des Modells, so dass eine Differenz zwischen Titanaufteilung und Titanverteilung minimal ist,
   - Positionieren der Glaskörperabschnitte, so dass im Schritt Verbinden die Glaskörperabschnitte gemäß der berechneten optimalen Anordnung verbunden werden.

Im Rahmen des Berechnens der optimalen Anordnung werden die Positionen der Glaskörperabschnitte zueinander permutiert. Aus jeder Permutation berechnet das Modell eine Titanaufteilung, welche anschließend durch Differenzbildung mit der Titanverteilung verglichen wird. Aus der Schar der Differenz kann dann die optimale Anordnung der Glaskörperabschnitte zueinander bestimmt werden, bei welcher die Differenz, insbesondere die räumliche Differenz zwischen Titanaufteilung und Titanverteilung minimal ist.

### Vorbestimmen

Im Rahmen des Schrittes Vorbestimmen wird eine optimale räumliche Verteilung von Titandioxid in der SiO2-Matrix ermittelt. Diese Titanaufteilung ist die Zielgröße der räumlichen Verteilung des Titans in dem Substratvorläufer, die bei der Herstellung optimalerweise erreicht werden soll.

Die Titanaufteilung beinhaltet sowohl die absolute Menge an Titandioxid im Substratvorläufer als auch deren räumliche Verteilung. Beispielhaft kann der Substratvorläufer eine quaderartige Form aufweisen. Dabei kann die Titanaufteilung parabelförmig ausgestaltet sein, wobei das Maximum der Titanaufteilung in einer Mitte einer Oberfläche des Substratvorläufers angeordnet ist. Zusätzlich können unterschiedliche Randbereich des Substratvorläufers gleiche oder unterschiedliche Titanaufteilungen aufweisen. In einer weiteren Ausführungsform kann die Titanaufteilung flach, also homogen, über den gesamten Substratvorläufers ausgestaltet sein.

### Bereitstellen

Das erfindungsgemäße Verfahren umfasst die Nutzung eines Modells einer Titanaufteilung in dem Substratvorläufer. Dieses Modell berechnet eine räumliche Verteilung von Titandioxid in der SiO2-Matrix. Dabei werden als Eingabeparameter des Modells verwendet:
A/ eine Anordnung der Mehrzahl der Glaskörperabschnitte in dem ersten Glasbauteil zueinander,
B/ der individuelle, räumliche Titanverlauf in einer Mehrzahl von Glaskörperabschnitten, und
C/ die Auswirkungen des Schritts Zusammenschieben und des Schritts Wenden auf die räumlichen Titanverläufe in den Glaskörperabschnitten.

Bei der Berechnung der räumlichen Verteilung von Titandioxid in der SiO2-Matrix auf Basis der genannten Eingabeparameter kann das Modell weitere Aspekte berücksichtigen.

Bei der Herstellung eines Glaskörpers entstehen langwellige und kurzwellige Schwankungen in der Menge des Titans und/oder anderer Eigenschaften in der SiO2-Matrix. Beide Typen werden in den Verfahrensschritten des hier offenbarten Verfahrens unterschiedlich beeinflusst. Mittels des Modells kann die Titanverteilung für eine Vielzahl von Anordnungen der Glaskörperabschnitte im Schritt Verbinden berechnet und mit einer Zielgröße verglichen werden. So kann die benötigte Qualität großer Substratvorläufer erreicht und Ausschuss reduziert werden.

Ausgangspunkt ist, dass sowohl die erste als auch die zweite Homogenisierungsbehandlung nur auf die kurzwelligen (mikroskopischen) Schichtstrukturen und/oder kurzwelligen (mikroskopische) Änderungen im Gehalt an Titandioxid wirken. Hingegen bleiben langwellige Änderungen im Gehalt an Titandioxid durch die zwei Homogenisierungsbehandlungen unbeeinflusst. Diese Tatsache ergibt sich aus den unterschiedlichen Längenskalen der Scherzone und des makroskopischen, herstellungsbedingten Titanverlaufs. Die Scherzone weist eine längliche Ausdehnung auf, die nur einige Zentimeter beträgt. Innerhalb dieser Scherzone werden nur kurzwellige Strukturen, die in der Ebene der Scherzone liegen, ausgeglichen.

Die langwelligen Variationen im Gehalt an Titandioxid werden durch die zwei Homogenisierungsbehandlungen nicht beeinflusst. Denn die Schwankungslängen der langwelligen Variationen im Gehalt an Titandioxid und/oder einer Eigenschaft sind mindestens doppelt so lang wie die Breite der Scherzone.

Der Schritt des Wendens beeinflusst die kurzwelligen (mikroskopischen) Schichtstrukturen und/oder kurzwelligen (mikroskopische) Änderungen im Gehalt an Titandioxid nicht. Über den Schritt des Wendens aber wird sichergestellt, dass die Scherzonen der ersten und der zweiten Homogenisierungsbehandlung mit Bezug auf die Längsachse des ersten Glasbauteils im Wesentlichen senkrecht zueinander angeordnet sind. Dadurch sollen kurzwellige Schwankungen möglichst vollständig nivelliert werden.

Der Schritt des Wendens beeinflusst die langwelligen Schwankungen. Durch das Ineinanderschieben des ersten Glasbauteils im Schritt Zusammenschieben werden unterschiedliche langwellige Schwankungen aus verschiedenen Glaskörperabschnitten miteinander vermischt. Entfernte Volumenelemente des ersten Glasbauteils werden durch den Prozess in direkte Nähe gebracht und können im folgenden Schritt vermengt werden. Dadurch kann es insbesondere - je nach Titanverlauf und/oder Eigenschaftsverlauf - zu einer Verstärkung oder Abschwächung der Schwankungshöhe der langwelligen Schwankungen kommen. Die Verstärkung oder Abschwächung der Schwankungshöhe hängt folglich von den Verläufen des Titans und/oder der Eigenschaften sowie der Anordnung der einzelnen Glaskörperabschnitte zueinander ab.

Final finden sich die Glasköperabschnitte in unterschiedlichen Ebenen des Substratvorläufers wieder. Die Zahl der Ebenen hängt von der Masse des Substratvorläufers sowie der Anzahl und der Masse der Glaskörperabschnitte ab. In einer Ausführungsvariante kann
- für einen Substratvorläufer mit einer Masse von mehr als 50 kg die Zahl der Ebenen zwischen 2 und 5 betragen,
- für einen Substratvorläufer mit einer Masse von mehr als 100 kg die Zahl der Ebenen zwischen 3 und 10 betragen,
- für einen Substratvorläufer mit einer Masse von mehr als 200 kg die Zahl der Ebenen zwischen 5 und 20 betragen,
- für einen Substratvorläufer mit einer Masse von mehr als 300 kg die Zahl der Ebenen zwischen 10 und 30 betragen.

Eine Ausnahme der Aussage, dass der Schritt des Wendens die langwelligen Schwankungen beeinflusst, gilt für ein makroskopisches Quarzglas-Volumenelement, welches in einer Mitte des länglichen ersten Glasbauteils angeordnet ist und insbesondere eine Größe zwischen 20 cm3 und 100 cm3 aufweist. Langwellige Variationen in den Eigenschaften, wie in der Menge des Titans in der SiO2-Matrix, finden sich auch in diesem makroskopischen Volumenelement wieder. Der Schritt des Wendens verändert die Position dieses Volumenelements nur derart, dass es sich in der Mitte des kugelförmigen Glassystems wiederfindet. Beim anschließenden Auseinanderziehen wird dieses Volumenelement wieder in der Mitte des länglichen zweiten Glasbauteils angeordnet. Folglich ist das besagte Volumenelement mit seinen durch die Homogenisierung unbeeinflussten langwelligen Schwankungen wieder zentral im zweiten Glasbauteil angeordnet.

In einer weiteren Ausführungsform schließt sich der Schritt eines Ausfließens in eine Graphitform dem Schritt der zweiten Homogenisierungsbehandlung an. Nach dem Schritt des Ausfließens findet sich das beschriebene Quarzglaselement in der Mitte des Substratvorläufers wieder und bestimmt somit wesentlich dessen Verhalten. Dies gilt umso mehr, als häufig eine konvexe Ausnehmung in den Substratvorläufer geschliffen wird, die den eigentlichen Spiegel aufnimmt, und somit das unmittelbar unterhalb der Ausnehmung liegende Volumenelement das Verhalten des Spiegels im Einsatz stark beeinflusst.

Folglich kann das Modell wenigstens einen der folgenden Aspekte berücksichtigen, um ein Optimum zu suchen, bei dem die folgenden Aspekte minimal und/oder optimal sind:
D/ den Gehalt an Titandioxid in funktionswesentlichen Bereichen, insbesondere in einem zentralen Volumenelement des Substratvorläufers, und
E/ den Gehalt an Titandioxid in unterschiedlichen Ebenen des Substratvorläufers.

Das mindestens von den drei aufgeführten Eingabeparametern A/ bis C/ abhängige Modell errechnet die sich beim Durchlaufen der Verfahrensschritte potenziell ergebende räumliche Verteilung von Titandioxid in der SiO2-Matrix des Substratvorläufers, die sich ergibt
- bei verschiedenen Anordnungen der Mehrzahl von Glaskörperabschnitten zueinander im ersten Glasbauteil, und/oder
- bei einer Auswahl der Mehrzahl von Glaskörperabschnitten aus einer größeren Vielzahl von Glaskörperabschnitten verbunden mit verschiedenen Anordnungen der Mehrzahl von Glaskörperabschnitten zueinander im ersten Glasbauteil.

### Berechnen

Die durch Permutation der Anordnung der Glaskörperabschnitte zueinander mit dem Modell berechneten Möglichkeiten an Titanaufteilungen in dem Substratvorläufer werden mit der angestrebten Titanaufteilung in dem Substratvorläufer verglichen. Da die Titanverteilung die angestrebte Zielgröße darstellt, erfolgt eine Auswahl der Anordnungen der Mehrzahl von Glaskörperabschnitten, bei der eine Differenz zwischen Titanaufteilung und Titanverteilung minimal ist.

Wie dargelegt, wird der Titanverlauf im Schritt räumliches Vermessen punktuell bestimmt. In einer Ausführungsvariante ermittelt das Modell nur eine Schar an Punkten und keine vollständige Kurve der Titanverteilung. Erfindungsgemäß wird jeweils eine Differenz für jede der möglichen Permutationen der Anordnung der Glaskörperabschnitte berechnet.

In einer Ausführungsform wird die Differenz der Zahlenreihe über das quadratische Mittel (englisch: root mean square RMS) bestimmt. Anschließend prüft das Modell, welche der für alle möglichen Permutationen der Anordnung der Glaskörperabschnitte zu einer minimalen, also im Betrag kleinsten, Differenz führt. Diejenige Anordnung der Glaskörperabschnitte deren berechnete Differenz zwischen Titanaufteilung und Titanverteilung minimal ist, wird dann im Schritt Verbinden genutzt.

In einer Ausführungsform wird die Differenz der Zahlenreihe über die Summe des Betrages der Differenzen bestimmt.

In einer Ausführungsform wird die Differenz der Zahlenreihe über das arithmetische Mittel bestimmt.

In einer Ausführungsform wird unter einer minimalen Differenz verstanden, dass die Differenz zwischen dem Betrag der Titanaufteilung und dem Betrag der Titanverteilung weniger als 1,5 % eines Maximalwerts der Titanverteilung beträgt, insbesondere weniger als 1,0 %, insbesondere weniger als 0,5 % beträgt. Die angegebenen Beträge der Differenz sind folglich relative Größen, bezogen auf den Maximalwert der Titanverteilung.

In einer Ausführungsform wird zur Bestimmung der Differenz wenigstens 75 %, insbesondere über wenigstens 85 %, insbesondere wenigstens 90 % einer Oberfläche des Substratvorläufers berücksichtigt.

In einer Ausführungsform wird zur Bestimmung der Differenz wenigstens 75 %, insbesondere über wenigstens 85 %, insbesondere wenigstens 90 % einer Oberfläche des Substratvorläufers, welche zur Bildung eines Spiegelelements in einem weiteren Schritt verspiegelt wird, berücksichtigt.

### Positionieren

Der angestrebte Substratvorläufer wird anschließend dadurch erzielt, dass im Schritt Verbinden die Glaskörperabschnitte gemäß der berechneten optimalen Anordnung verbunden werden.

Eine Ausführungsform ist dadurch gekennzeichnet, dass der Substratvorläufer eine Masse von mehr als 200 kg, insbesondere mehr als 300 kg aufweist. Der makroskopische, herstellungsbedingte Titanverlauf kann im Rahmen von OVD- oder DQ-Verfahren zu einer räumlichen Variation des Titandioxidgehalts von bis zu 0,5 % bezogen auf den angestrebten Titandioxidgehalt innerhalb eines 200 kg TiO2-SiO2-Mischglases betragen. Die räumliche Variation des Titandioxidgehalts weist im Allgemeinen einen stetigen Verlauf auf, wobei die Schwankungslängen zwischen 10 cm und 50 cm betragen. Im Gegensatz dazu weisen die Scherzone und zweite Scherzone, in denen im Rahmen der zwei Homogenisierungsbehandlungen ein Vermischen des TiO2-SiO2-Mischglases erfolgt, eine Länge von 2 cm bis 8 cm auf.

Bei Substratvorläufern mit einer Masse von mehr als 100 kg, insbesondere mehr als 200 kg, insbesondere mehr als 300 kg weist das erste Glasbauteil eine Länge von mehr als 2 m, insbesondere mehr als 2,8 m auf. Folglich können eine Mehrzahl von makroskopischen, herstellungsbedingten Schwankungen im Titanverlauf auftreten, die bei kleineren Substratvorläufern mit einer Masse von weniger als 30 kg keine Auswirkungen haben würden. Eine Ausführungsform ist dadurch gekennzeichnet, dass das Verfahren nach der zweiten Homogenisierungsbehandlung den folgenden Schritt aufweist:
- Umformen des zweiten Glasbauteils durch Erweichen und Ausfließen in eine beheizte Form, in die das zweite Glasbauteil unter Einwirkung einer Kraft unter Bildung des Substratvorläufer ausfließt.

In einer Ausführungsform kann der Schritt Ausfließen insbesondere dazu dienen, dass im zweiten Glasbauteil stangenartig ausgestaltet TiO2-SiO2-Mischglas in einen blockartige ausgestalteten Substratvorläufer umgewandelt wird. Dazu kann die Form einen blockartigen Innenraum aufweisen, in welchen das TiO2-SiO2-Mischglas des zweiten Glasbauteil ausfließt. Insbesondere kann die Form einen Innenraum aufweisen, der der gewünschten Kontur und Geometrie des angestrebten Spiegels entspricht und der Substratvorläufer keiner wesentlichen Nachbearbeitung bedarf (sog. "near net shape")

Im Rahmen des Schritts Ausfließen kann das zweite Glasbauteil in die beheizte Form gestellt werden und dort unter dem Eigengewicht oder unter einer zusätzlichen, in Achsrichtung wirkenden Kraft ausfließen. Anstelle des langsamen Ausfließens in der aufgeheizten Form kann die gleiche Verformung auch dadurch erreicht werden, dass das zweite Glasbauteil kontinuierlich einer Erhitzungszone zugeführt wird und dort über seine Länge die im Erhitzungsbereich angeordnete Form erweicht.

Eine Ausführungsform ist dadurch gekennzeichnet, dass das Verfahren den folgenden Schritt umfasst:
- Herstellen eines zweiten Glaskörpers mit einem Titandioxidgehalt von 3 Gew.-% bis zu 10 Gew.-%, wobei der zweite Glaskörper:
   - einen zweiten, makroskopischen, herstellungsbedingten Titanverlauf aufweist, und
   - eine zweite, mikroskopische, herstellungsbedingte Schichtstruktur aufweist,
- Aufteilen des Glaskörpers in eine Mehrzahl von stangenartigen Glaskörperabschnitten.

Um Substratvorläufer mit einer Masse von mehr als 100 kg, insbesondere mehr als 200 kg, insbesondere mehr als 300 kg herzustellen, kann es notwendig sein, nicht nur einen ersten Glaskörper, sondern auch einen zweiten Glaskörper herzustellen.

Dabei weisen der erste und der zweite Glaskörper unterschiedliche makroskopische, herstellungsbedingte Titanverläufe auf. Nach dem Schritt Herstellen erfolgt ein Aufteilen des Glaskörpers in eine Mehrzahl von stangenartigen Glaskörperabschnitten und ein Aufteilen des zweiten Glaskörpers in eine Mehrzahl von stangenartigen Glaskörperabschnitten.

In einer Ausführungsform werden sämtliche der sich aus dem ersten Glaskörper ergebenden Mehrzahl von stangenartigen Glaskörperabschnitten und der sich aus dem zweiten Glaskörper ergebenden Mehrzahl von stangenartigen Glaskörperabschnitten zum ersten Glasbauteil zusammengefügt.

In einer Ausführungsform ist die sich aus der Summe
- der sich aus dem ersten Glaskörper ergebenden Mehrzahl von stangenartigen Glaskörperabschnitten und
- der sich aus dem zweiten Glaskörper ergebenden Mehrzahl von stangenartigen Glaskörperabschnitten
ergebende Vielzahl an Glaskörperabschnitten größer als die benötigte Mehrzahl von stangenartigen Glaskörperabschnitten zur Erstellung des ersten Glasbauteils. In diesem Fall wird im Rahmen des Schritts Berechnen eine Auswahl aus der Vielzahl der zur Verfügung stehenden Glaskörperabschnitte für die benötigte Mehrzahl getroffen, so dass eine Differenz zwischen Titanaufteilung und Titanverteilung minimal ist.

In einer Ausführungsform beträgt
- die Vielzahl der Glaskörperabschnitte ein um den Faktor 1,1 bis 2 Mehrfaches der Mehrzahl, insbesondere
- die Vielzahl der Glaskörperabschnitte mindestens zwanzig und die Mehrzahl der zum ersten Glasbauteil zusammengefügten Glaskörperabschnitte maximal fünfzehn, insbesondere
- die Vielzahl der Glaskörperabschnitte mindestens fünfzehn und die Mehrzahl der zum ersten Glasbauteil zusammengefügten Glaskörperabschnitte maximal zehn.

Mittels des offenbarten Verfahrens lässt sich eine Auswahl treffen, die die oben genannten Nachteile im Stand der Technik überwindet.

Eine Ausführungsform ist dadurch gekennzeichnet, dass zur Bildung des ersten Glasbauteils mindestens drei, insbesondere mindestens fünf, insbesondere mindestens acht Glaskörperabschnitte verbunden werden.

Bei Substratvorläufern mit einer Masse von mehr als 100 kg bedarf es einer Mehrzahl von Glaskörperabschnitten, die miteinander verbunden werden. Durch Schwankungslängen zwischen 10 cm und 50 cm der räumlichen Variationen des Titandioxidgehalts ist das erfindungsgemäße Verfahren besonders geeignet bei einer Kombination von mehr als drei, insbesondere mehr als fünf, insbesondere mehr als acht Glaskörperabschnitten, um einen Substratvorläufer zu erstellen, der den strengen Anforderungen der EUV-Mikrolithographie genügt.

Eine Ausführungsform ist dadurch gekennzeichnet, dass die Differenz zwischen Titanaufteilung und Titanverteilung weniger als 1,5 % bezogen auf einen Maximalwert der Titanverteilung beträgt, insbesondere weniger als 1,0 %, insbesondere weniger als 0,5 %.

Im Rahmen des Schrittes Vermessen wird ein Minimum der Differenz zwischen Titanaufteilung und Titanverteilung mittels des Vergleichs zwischen Modell und anzustrebender Titanverteilung bestimmt. Aufgrund der immer stärker steigenden Anforderungen an die Materialbeschaffenheit der Substratvorläufer kann der Absolutbetrag der Differenz den oben genannten Schranken unterworfen sein.

Eine Ausführungsform ist dadurch gekennzeichnet, dass der Glaskörper wenigstens einen der folgenden Eigenschaftsverläufe aufweist:
- einen makroskopischen, herstellungsbedingten OH-Verlauf,
- einen makroskopischen, herstellungsbedingten CTE-Verlauf,
- einen makroskopischen, herstellungsbedingten Fluor-Verlauf,
- einen makroskopischen, herstellungsbedingten Blasenverlauf,
- einen makroskopischen, herstellungsbedingten ODC-Verlauf,
- einen makroskopischen, herstellungsbedingten Ti3+-Verlauf,
- einen makroskopischen, herstellungsbedingten Verlauf von metallischen Verunreinigungen.

Bei OVD- oder DQ-Verfahren kann es zu makroskopischen, herstellungsbedingten Variationen der oben aufgeführten Eigenschaften kommen. Die dabei auftretenden Schwankungslängen sind vergleichbar mit jenen von Titandioxid und betragen insbesondere bei OH, CTE, Ti3+ zwischen 12,5 cm und 50 cm und bei Fluor, Blasen, ODC, metallischen Verunreinigungen zwischen 15 cm und 85 cm.

Eine Ausführungsform ist dadurch gekennzeichnet, dass im Schritt Vermessen wenigstens einer der Eigenschaftsverläufe in jedem der Glaskörperabschnitte vermessen wird.

Eine Ausführungsform ist dadurch gekennzeichnet, dass der Schritt Vermessen folgende Schritte umfasst:
- Vorbestimmen einer anzustrebenden, räumlichen Eigenschaftsverteilung in dem Substratvorläufer,
- Bereitstellen eines Modells einer Eigenschaftsaufteilung in dem Substratvorläufer, wobei das Modell abhängig ist von
   - einer Anordnung der Mehrzahl der Glaskörperabschnitte in dem ersten Glasbauteil zueinander,
   - einem räumlichen Eigenschaftsverlauf in jedem der Glaskörperabschnitte, und
   - den Auswirkungen des Schritts Zusammenschieben und des Schritts Wenden auf den räumlichen Eigenschaftsverlauf in den Glaskörperabschnitten,
- Berechnen einer bestmöglichen Anordnung der Glaskörperabschnitte zueinander mittels des Modells, so dass eine Summendifferenz minimal ist, wobei die Summendifferenz
   - die Differenz zwischen Titanaufteilung und Titanverteilung und
   - die Differenz zwischen Eigenschaftsaufteilung und Eigenschaftsverteilung aufweist,
   - Positionieren der Glaskörperabschnitte, so dass im Schritt Verbinden die Glaskörperabschnitte gemäß der berechneten bestmöglichen Anordnung verbunden werden.

Parallel zum Schritt des Vorbestimmens der Titanverteilung wird in dieser Ausführungsvariante wenigstens eine anzustrebende, räumliche Eigenschaftsverteilung in dem Substratvorläufer vorbestimmt. Die wenigstens eine Eigenschaftsverteilung stellt somit neben der Titanverteilung eine zweite Zielgröße dar, die optimalerweise in dem Substratvorläufer erfüllt und/oder angestrebt wird.

In einer Ausführungsvariante kann die Summendifferenz aus der Summe
- des Betrages der Differenz zwischen Titanaufteilung und Titanverteilung und
- des Betrages der Differenz zwischen Eigenschaftsaufteilung und Eigenschaftsverteilung
berechnet werden.

Wie der Titanverlauf wird auch der Eigenschaftsverlauf punktuell vermessen. Das Modell berechnet aus der Schar an Werten für die Eigenschaft dann jeweils die Werte der Eigenschaft im Substratvorläufer (die Eigenschaftsaufteilung). Smit kann das Modell aus der Schar an Werten eine Differenz zwischen Eigenschaftsaufteilung und Eigenschaftsverteilung für jede der möglichen Permutationen der Anordnung der Glaskörperabschnitte berechnet.

Basierend darauf kann das Modell für jede der möglichen Permutationen der Anordnung der Glaskörperabschnitte zwei unabhängige Differenzen, nämlich
- die Differenz zwischen Titanaufteilung und Titanverteilung und
- die Differenz zwischen Eigenschaftsaufteilung und Eigenschaftsverteilung bestimmen. In einer Ausführungsform wird jede der beiden Differenzen über das quadratische Mittel (englisch: root mean square RMS) bestimmt. In einer Ausführungsform wird jede der beiden Differenzen über das arithmetische Mittel bestimmt.

Anschließend bildet das Modell für jede mögliche Permutation eine Summendifferenz. Dabei können die beiden zu betrachtenden Differenzen unterschiedlich miteinander addiert werden. So kann die Summendifferenz aus
- der Summe der Beträge der beiden zu betrachtenden Differenzen, oder
- dem arithmetischen Mittel oder geometrischen Mittel der beiden zu betrachtenden Differenzen, oder
- dem gewichteten Mittel der beiden zu betrachtenden Differenzen berechnet werden.

In einer Ausführungsvariante kann das Modell bei der Bestimmung der Summendifferenz
- die Differenz zwischen Titanaufteilung und Titanverteilung und
- die Differenz zwischen Eigenschaftsaufteilung und Eigenschaftsverteilung unterschiedlich wichten. So kann etwa die Differenz zwischen Titanaufteilung und Titanverteilung bei der Suche nach dem Minimum der Summendifferenz doppelt oder dreifach berücksichtigt werden, da die Menge an Titandioxid die CTE wesentlich beeinflusst und somit für den Verwendungszweck besonders beachtet werden muss.

In einer Ausführungsform wird unter einer minimalen Summendifferenz verstanden, dass
- die Differenz zwischen der Titanaufteilung und der Titanverteilung über wenigstens 75 %, insbesondere über wenigstens 85 %, insbesondere wenigstens 90 % einer Oberfläche des Substratvorläufers weniger als 1,5 % bezogen auf einen Maximalwert der Titanverteilung beträgt, insbesondere weniger als 1,0 %, insbesondere weniger als 0,5 % beträgt, und
- die Differenz zwischen der Eigenschaftsaufteilung und Eigenschaftsverteilung über wenigstens 75 %, insbesondere über wenigstens 85 %, insbesondere wenigstens 90 % einer Oberfläche des Substratvorläufers weniger als 1,5 % bezogen auf einen Maximalwert der Eigenschaftsverteilung beträgt, insbesondere weniger als 1,0 %, insbesondere weniger als 0,5 % beträgt.

In einer Ausführungsform wird unter einer minimalen Summendifferenz verstanden, dass
- die Differenz zwischen der Titanaufteilung und der Titanverteilung über wenigstens 75 %, insbesondere über wenigstens 85 %, insbesondere wenigstens 90 % einer Oberfläche, welche zur Bildung eines Spiegelelements in einem weiteren Schritt verspiegelt wird, des Substratvorläufers weniger als 1,5 % eines Maximalwerts der Titanverteilung beträgt, insbesondere weniger als 1,0 %, insbesondere weniger als 0,5 % beträgt, und
- die Differenz zwischen der Eigenschaftsaufteilung und Eigenschaftsverteilung über wenigstens 75 %, insbesondere über wenigstens 85 %, insbesondere wenigstens 90 % einer Oberfläche des Substratvorläufers, welche zur Bildung eines Spiegelelements in einem weiteren Schritt verspiegelt wird, weniger als 1,5 % eines Maximalwerts der Eigenschaftsverteilung beträgt, insbesondere weniger als 1,0 %, insbesondere weniger als 0,5 % beträgt.

Das in dieser Ausführungsvariante genutzte Modell ist funktional abhängig von
- einer Anordnung der Mehrzahl der Glaskörperabschnitte in dem ersten Glasbauteil zueinander,
- dem räumlichen Titanverlauf und einem räumlichen Eigenschaftsverlauf in jedem der Glaskörperabschnitte, und
- den Auswirkungen des Schritts Zusammenschieben und des Schritts Wenden auf den räumlichen Titanverlauf und auf den räumlichen Eigenschaftsverlauf in den Glaskörperabschnitten.

Es werden folglich sowohl die Titandioxid betreffenden Aspekte als auch die die wenigstens eine weitere Eigenschaft (z.B. ODC, Ti3+ etc.) betreffenden Aspekte bei der Berechnung der optimalen Anordnung der Glaskörperabschnitte berücksichtigt.

Basierend auf dem Lösungsraum an möglichen Anordnungen der Glaskörperabschnitte zueinander wird eine bestmögliche Anordnung der Glaskörperabschnitte durch Permutation bestimmt. Ziel ist dabei, dass die Summendifferenz minimal ist, wobei die Summendifferenz
- die Differenz zwischen Titanaufteilung und Titanverteilung und
- die zweite Differenz zwischen der wenigstens einen Eigenschaftsaufteilung und der wenigstens einen Eigenschaftsverteilung umfasst.

Im Anschluss erfolgt ein derartiges Positionieren der Glaskörperabschnitte, dass im Schritt Verbinden die Glaskörperabschnitte gemäß der berechneten bestmöglichen Anordnung verbunden werden.

Eine Ausführungsform ist dadurch gekennzeichnet, dass die Summendifferenz weniger als 1,5 % der Summe eines Maximalwerts der Titanverteilung und eines Maximalwerts der Eigenschaftsverteilung beträgt, insbesondere weniger als 1,0 %, insbesondere weniger als 0,5 %.

Eine Ausführungsform ist dadurch gekennzeichnet, dass
- die Differenz zwischen Titanaufteilung und Titanverteilung weniger als 1,5 %, insbesondere weniger als 1,0 %, insbesondere weniger als 0,5 % des Maximalwerts der Titanverteilung beträgt, und
- die zweite Differenz zwischen der wenigstens einen Eigenschaftsaufteilung und der wenigstens einen Eigenschaftsverteilung weniger als 1,5 %, insbesondere weniger als 1,0 %, insbesondere weniger als 0,5 % des Maximalwerts der jeweiligen Eigenschaftsverteilung beträgt.

Diese Ausführungsform ist besonders geeignet, um die hohen Anforderungen an EUV-Substratvorläufer zu erfüllen. Substratvorläufer, die Differenzen und zweite Differenzen aufweisen, welche oberhalb der aufgeführten Werte liegen, sind häufig nicht nutzbar für die Erstellung von Spiegelsubstraten, welche Abweichungen von vorhergesagten Linienkanten kleiner als 3 nm aufweisen.

Eine Ausführungsform ist dadurch gekennzeichnet, dass
- die Differenz zwischen Titanaufteilung und Titanverteilung zwischen 0,15 % und 1 % des Maximalwerts der Titanverteilung beträgt, und
- die zweite Differenz
   ∘ zwischen der Ti3+-Aufteilung und der Ti3+ Verteilung weniger als 5,0 %, insbesondere weniger als 2,0 % des Maximalwerts der Ti3+-Verteilung beträgt, und
   ∘ zwischen der OH-Aufteilung und der OH-Verteilung weniger als 2,0 %, insbesondere weniger als 1,0 %, insbesondere weniger als 0,5 % des Maximalwerts der OH-Verteilung beträgt.

Diese Ausführungsform ist besonders geeignet, um Substratvorläufer zu erstellen, aus denen Spiegelsubstrate erstellbar sind, die Abweichungen von vorhergesagten Linienkanten kleiner als 3 nm aufweisen.

Eine Ausführungsform ist dadurch gekennzeichnet, dass der Schritt Herstellen des Glaskörpers wenigstens folgende Schritte umfasst:
- Erstellen eines porösen Sootkörpers, wobei der makroskopische, herstellungsbedingte Titanverlauf entlang einer Längsachse und die mikroskopische, prozessbedingte Schichtstruktur entlang einer Wachstumsachse verläuft,
- Verglasen des Sootkörpers, um den zylindrischen Glaskörper zu erstellen.

In einer Ausführungsform der Erfindung umfasst der Schritt Erstellen eines porösen Sootkörpers folgende Verfahrensschritte:
- Bereitstellen eines flüssigen SiO2-Einsatzmaterials, welches mehr als 60 Gew.-% des Polyalkylsiloxans D4 aufweist,
- Verdampfen des flüssigen SiO2-Einsatzmaterials in einen gasförmigen SiO2-Einsatzdampf,
- Verdampfen eines flüssigen TiO2-Einsatzmaterials in einen gasförmigen TiO2-Einsatzdampf,
- Umsetzen des SiO2-Einsatzdampfs und des TiO2-Einsatzdampfs zu SiO2-Partikeln und TiO2-Partikeln,
- Abscheiden der SiO2-Partikel und der TiO2-Partikel auf einer Ablagerungsfläche unter Bildung des porösen Sootkörpers.

Octamethylcyclotetrasiloxan (hier auch als D4 bezeichnet) bildet die Hauptkomponente bei der Herstellung des Sootkörpers. Die Herstellung eines Sootkörpers gemäß den oben genannten Schritten reduziert die Stärken der makroskopischen, herstellungsbedingten Titandioxid- und/oder Eigenschaftsverläufe.

Eine Ausführungsform ist dadurch gekennzeichnet, dass das erste Glasbauteil vor dem Schritt Zusammenschieben erhitzt wird. Durch das Erhitzen wird das erste Glasbauteil zumindest partiell viskos, was eine mechanische Verformung erleichtert. Das Erhitzen kann im Rahmen eines flammenbasierten Heißprozesses oder eines flammenfreien Heißprozesses erfolgen.

Eine Ausführungsform ist dadurch gekennzeichnet, dass das Verbinden an einer jeweiligen Kontaktfläche der Glaskörperabschnitte erfolgt.

Die in der Beschreibung offenbarten Merkmale können für verschiedene Ausführungsformen der beanspruchten Erfindung sowohl getrennt als auch in beliebiger Kombination miteinander wesentlich sein.

Bei den für die Differenz, die Summendifferenz und die zweite Differenz angegebenen Werten handelt es sich im um relative Größen, die sich auf die jeweilige Verteilung - also die jeweilige im Substratvorläufer angestrebte Menge - beziehen.

In diesem Dokument sind Ausführungsformen, die zwei oder mehr Merkmale offenbaren, welche jeweils bevorzugte Bereiche oder Alternativen haben, so zu verstehen, dass sie alle möglichen Kombinationen dieser Merkmale umfassen.

In der vorliegenden Beschreibung beinhalten Bereichsangaben auch die als Grenzen genannten Werte. Eine Angabe der Art "im Bereich von X bis Y" in Bezug auf eine Größe A bedeutet folglich, dass A die Werte X, Y und Werte zwischen X und Y annehmen kann. Einseitig begrenzte Bereiche der Art "bis zu Y" für eine Größe A bedeuten entsprechend als Wert Y und kleiner als Y.

Die Erfindung wird im Folgenden durch Figuren weiter beispielhaft illustriert. Die Erfindung ist nicht auf die Figuren beschränkt.

### Figuren

Es zeigen
- Fig. 1: ein Erstellen eines Sootkörpers,
- Fig. 2: ein Verglasen des Sootkörpers zu einem Glaskörper,
- Fig. 3: den Glaskörper,
- Fig. 4: einen Glaskörperabschnitt, der aus einem Aufteilen des Glaskörpers erstellt wurde,
- Fig. 5: eine Darstellung eines zweidimensionalen makroskopischen, herstellungsbedingten Titanverlaufs in einem Glaskörperabschnitt,
- Fig. 6: eine Anordnung von zwei Glaskörperabschnitten,
- Fig. 7a: ein Substratvorläufer,
- Fig. 7b: eine Darstellung eines Titanverlaufs mehrerer Glaskörperabschnitte im Vergleich zu einer angestrebten Titanverteilung,
- Fig. 8: eine weitere Darstellung eines Titanverlaufs mehrerer Glaskörperabschnitte im Vergleich zu einer angestrebten Titanverteilung,
- Fig. 9: eine erste Homogenisierungsbehandlung,
- Fig. 10: ein Zusammenschieben des ersten Glasbauteils,
- Fig. 11: eine zweite Homogenisierungsbehandlung, und
- Fig. 12: eine Darstellung des erfindungsgemäßen Verfahrens.

### Beschreibung der Figuren

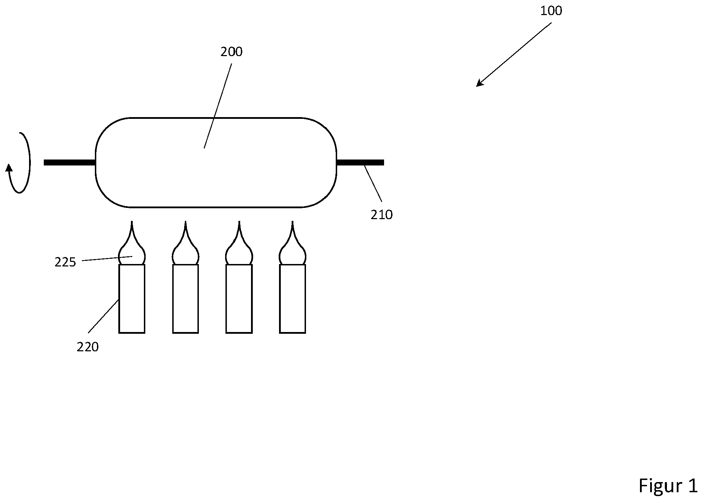

**Figur 1** zeigt eine Vorrichtung 100 zur Herstellung eines Titan-dotierten SiO2-Sootkörpers 200. Entlang eines Trägerrohres 210 aus Aluminiumoxid ist eine Vielzahl in einer Reihe angeordneter Flammhydrolysebrenner 220 angeordnet.

Ein Siliziumdioxid-Rohmaterial und ein Titandioxid-Rohmaterial werden der Reaktionszone des Flammhydrolysebrenners 220 in gasförmiger Form zugeführt und dabei durch Oxidation und/oder Hydrolyse und/oder Pyrolyse zersetzt. In der Reaktionszone entstehen zum einen SiO2-Partikel und zum anderen TiO2-Partikel, die beide unter Bildung des SiO2-TiO2-Sootkörpers 200 auf dem Trägerrohr 210 schichtweise niedergeschlagen werden. Die SiO2-TiO2-Partikel selbst liegen in Form von Agglomeraten oder Aggregaten von SiO2-Primärpartikeln mit Partikelgrößen im Nanometerbereich vor. Insbesondere durch den schichtweisen Aufbau kann der Sootkörper 200 eine mikroskopische Schichtstruktur aufweisen.

Insbesondere bei der Herstellung 1100 von großvolumigen zylinderförmigen Sootkörpern 200, zur Herstellung eines Substratvorläufers 900 mit einer Masse von mehr als 50 kg, insbesondere mehr als 100 kg, insbesondere von mehr als 200 kg, können die Flammhydrolysebrenner 220 auf einem gemeinsamen Brennerblock montiert sein, der parallel zu einer Längsachse des Trägerrohrs 210 zwischen zwei in Bezug auf die Längsachse ortsfesten Wendepunkten hin- und herbewegt wird.

Diese Bewegung der Flammhydrolysebrenner 220,mechanische Ungenauigkeiten in den Zuleitungen der Rohstoffe oder der Brenner 220 oder auch Variationen in den Prozesstemperaturen können dazu führen, dass der Sootkörper 200 eine makroskopische, herstellungsbedingte räumliche Schwankung in den physikalischen Eigenschaften, wie etwa dem TiO2-Gehalt, aufweist.

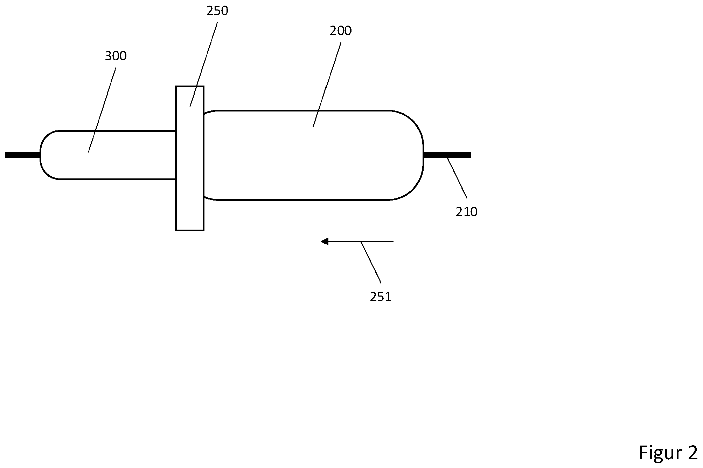

In der **Figur 2** ist ein Verglasen des Sootkörpers 200 dargestellt. Vorzugsweise erfolgt das Verglasen in einer Prozesskammer. Vorzugsweise liegt die Verglasungstemperatur in einem Bereich von 1200 bis 1500 °C, vorzugsweise 1250 bis 1350 °C. Um Blasenbildung im späteren Quarzglas zu vermeiden, hat es sich als vorteilhaft erwiesen, wenn während der Verglasung der Druck innerhalb der Prozesskammer geringer ist als außerhalb der Prozesskammer, d.h. die Verglasung bei vermindertem Druck durchgeführt wird. Dies hat weiterhin den Vorteil, dass das Material der Prozesskammer nicht durch aggressive und korrosive Gase angegriffen wird und daher einem verringerten Verschleiß unterliegt. Daher ist eine Ausführungsform bevorzugt, in der das Verglasen vorzugsweise bei einem Druck von weniger als 1 mbar erfolgt. Im Rahmen des Verglasens kann der Sootkörper 200 gemäß Bewegungspfeil 251 durch einen Verglasungsofen 250 gefahren werden.

Durch das Verglasen entsteht aus dem Sootkörper 200 ein Glaskörper 300 mit einem Titandioxidgehalt von 3 Gew.-% bis zu 10 Gew.-%. Die schon im Sootkörper 200 aufgetretenen herstellungsbedingten Schwankungen in den physikalischen Eigenschaften werden auf den Glaskörper 300 übertragen, so dass dieser
- einen makroskopischen, herstellungsbedingten Titanverlauf aufweist, und
- eine mikroskopische, herstellungsbedingte Schichtstruktur aufweist.

Die für Titan angegebene Masse von 3 Gew.-% bis zu 10 Gew.-%. bezieht sich auf die Menge an TiO2 (Titandioxid), nicht elementaren Titan.

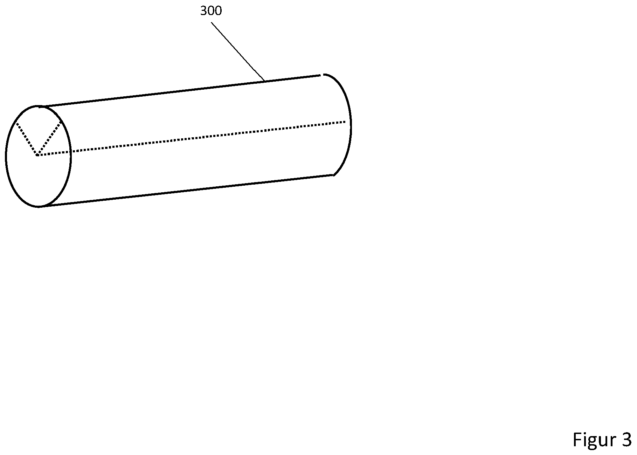

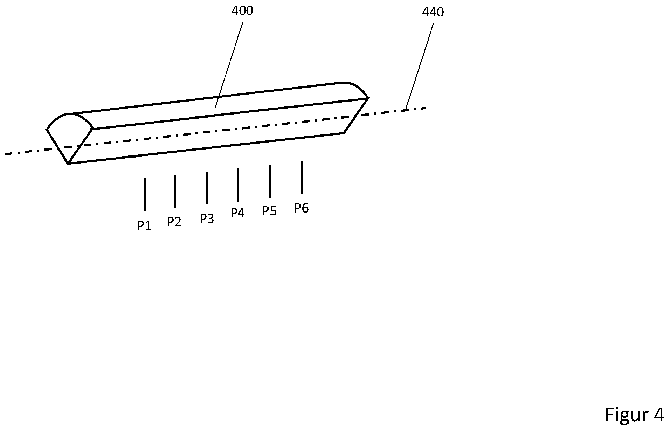

In der **Figur 3** ist der zylinderartige Glaskörper 300 dargestellt. Mit einer gepunkteten Linie ist ein Abschnitt angedeutet, der im Rahmen des Schrittes Aufteilen 1200 aus dem Glaskörper geschnitten wird. Der so erstellte stangenartige Glaskörperabschnitt 400 ist in der **Figur 4** dargestellt. Insbesondere kann der Glaskörper 300 in eine Mehrzahl von stangenartigen Glaskörperabschnitten 400 aufgeteilt werden, welche eine Längsasche 440 aufweisen. Insbesondere können die Glaskörperabschnitte 400 einen kreissektorartigen Querschnitt aufweisen.

Durch eine erste Homogenisierungsbehandlung 1600 eines ersten Glasbauteils sowie eine zweite Homogenisierungsbehandlung 2000 eines zweiten Glasbauteils wird die mikroskopische, herstellungsbedingte Schichtstruktur derart stark reduziert, dass der Glaskörperabschnitt 400 im Wesentlichen schichtstrukturfrei ist. Allerdings ermöglichen es die beiden Homogenisierungsbehandlungen 1600, 2000 nicht, dass der Substratvorläufer 900 frei ist von langwelligen Titanverläufen, die wesentlich die Qualität und Nutzbarkeit des Substratvorläufers 900 in der EUV-Lithographie beeinflussen.

In Figur 4 ist der Glaskörperabschnitt 400 dargestellt, an welchem ein Titanverlauf 410 räumlich vermessen wird. Dazu wird an mehreren Messstellen (P1, P2, P3, P4, P5, P6) entlang der Längsachse 420 der Gehalt an Titandioxid vermessen. Diese Messstellen haben eine Distanz von weniger als 5 cm, insbesondere weniger als 2 cm zueinander. Diese punktuelle Vermessung des Gehalts an Titandioxid gibt ein klares Bild der Verhältnisse im Glaskörperabschnitt 400 wieder. Etwaige Schwankungen im Titanverlauf spielen sich auf Längenskalen von 0,15 m bis 0,75 m ab.

Zusätzlich können im Rahmen des Herstellens 1100 des Sootkörpers 200 durch mechanische Einflüsse weitere makroskopische, herstellungsbedingte Variationen von chemischen und/oder physikalischen Eigenschaften des Glaskörpers 300 entstehen. Wenigstens eine dieser als Eigenschaftsverlauf 510 bezeichneten Variationen kann ebenfalls im Schritt Vermessen 1300 bestimmt werden. Folgende chemische und/oder physikalische Eigenschaften, die makroskopische, herstellungsbedingte Eigenschaftsverläufe 510 aufweisen, können einzeln oder in beliebiger Kombination vermessen werden: OH-Gehalt, CTE, Fluor-Gehalt, Blasengehalt, ODC-Gehalt, Ti3+-Gehalt, und Gehalt von metallischen Verunreinigungen.

Der Eigenschaftsverlauf 510 kann parallel und analog zum Titanverlauf 410 gemessen werden. Dazu wird an mehreren Messstellen (P1, P2, P3, P4, P5, P6) entlang der Längsachse 420 die physikalische Eigenschaft vermessen. Auch hier haben die Messstellen eine Distanz von weniger als 5 cm, insbesondere weniger als 2 cm zueinander.

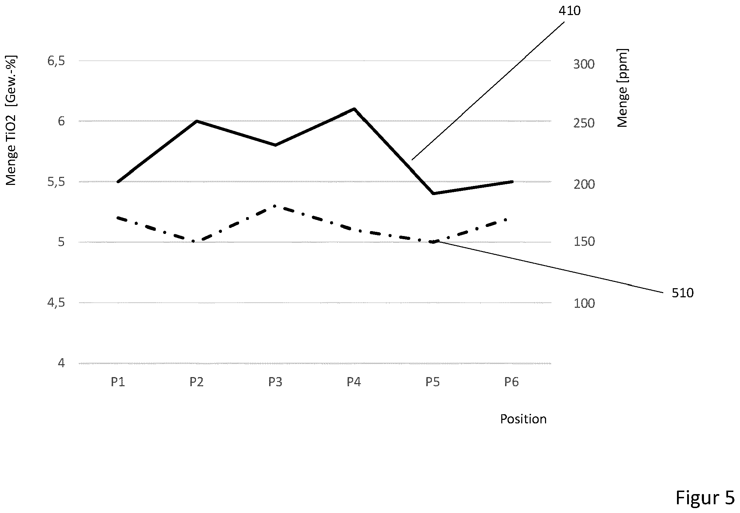

In der **Figur 5** ist schematisch das Ergebnis eines Vermessens 1300 eines Titanverlaufs 410 und eines Eigenschaftsverlaufs 510 in dem Glaskörperabschnitt 400 dargestellt. Aufgetragen ist die Menge in Gew.-% an Titandioxid bzw. in ppm der Eigenschaft als Funktion der Position entlang der Längsachse 440 des Glaskörperabschnitts 400. Zur Vereinfachung der Beschreibung sind in Figur 4 sowie 5 nur Messergebnisse für sechs Messstellen (P1, P2, P3, P4, P5, P6) gezeigt.

Die im Folgenden beschriebenen Schritte und/oder Aspekte des räumlichen Vermessens 1300 des Titanverlaufs 410 gelten auch für ein räumliches Vermessen wenigstens eines Eigenschaftsverlaufs 510.

Wie dem Diagramm zu entnehmen ist, liegt der Gehalt an Titandioxid innerhalb des vorgegebenen Intervalls von 3 Gew.-% bis 10 Gew.-%. Herstellungsbedingt schwankt dieser Gehalt an Titandioxid entlang der Längsachse 420 des Glaskörperabschnitts 400 aber zwischen 5,4 Gew.-% bis 6,1 Gew.-%.

Gleichfalls dargestellt ist die an den sechs Messstellen (P1, P2, P3, P4) vermessene Menge einer Eigenschaft, hier beispielhaft der OH-Gehalt in ppm, als Eigenschaftsverlauf 510. Herstellungsbedingt schwankt dieser Gehalt an OH entlang der Längsachse 420 des Glaskörperabschnitts 400 zwischen 150 ppm bis 175 ppm.

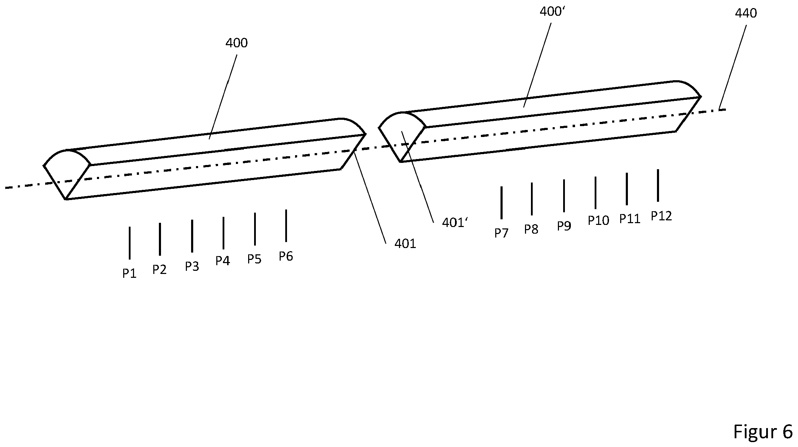

In der **Figur 6** ist ein Verbinden 1500 einer Mehrzahl - hier zwei - stangenartiger Glaskörperabschnitte 400,400` zur Bildung eines länglichen ersten Glasbauteils 600 dargestellt.

Dazu kann eine plane Kontaktfläche 401 des ersten Glaskörperabschnitts 400 und eine plane Kontaktfläche 401' des zweiten Glaskörperabschnitts 400' durch Ansprengen zusammengefügt und miteinander verschweißt werden. Hierbei handelt es sich um ein "kaltes Verbindungsverfahren", bei dem allenfalls der unmittelbare Bereich der Kontaktfläche eine nennenswerte Erwärmung erfährt.

Alternativ dazu kann das Verbinden 1500 einen Verbindungsschritt umfassen, bei dem beide Glaskörperabschnitte 400, 400' in einem Ofen erweicht und zusammengefügt werden. Hierbei handelt es sich um ein "heißes Verbindungsverfahren", bei dem die einzelnen Glaskörperabschnitte 400, 400`durch Verschweißen aneinandergefügt werden. Wie beschrieben, werden die Titandioxid- und/oder Eigenschaftsverläufe an mehreren Messstellen vermessen. Für den Glaskörperabschnitt 400 wird beispielhaft der Titanverlauf 410 an den Messstellen P1, P2, P3, P4, P5, P6 vermessen. Für den Glaskörperabschnitt 400' wird beispielhaft der Titanverlauf 410` an den Messstellen P7, P8, P9, P10, P11, P12 vermessen.

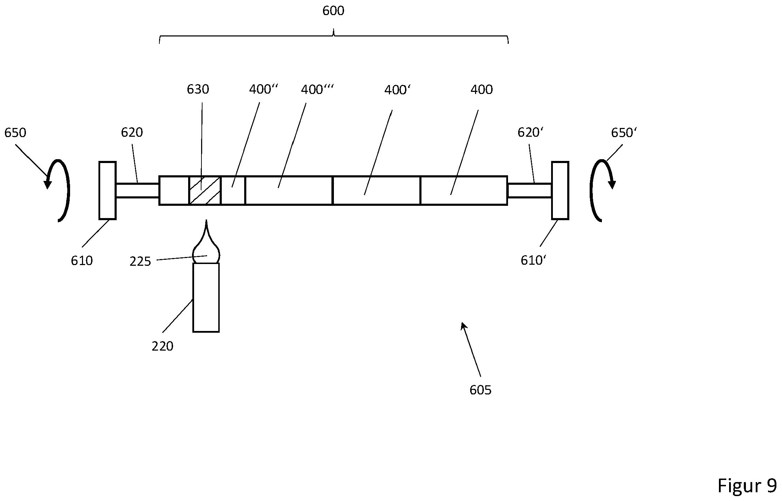

Im Rahmen des Verfahrens können so zur Bildung eines ersten Glasbauteils 600 mindestens drei, insbesondere mindestens fünf, insbesondere mindestens acht Glaskörperabschnitte miteinander verbunden werden, was auch Figur 9 verdeutlicht.

Wie Figur 5 verdeutlicht, schwankt der Titanverlauf 410 entlang der Längsachse des Glaskörperabschnitts 400. Zusätzlich schwankt der Titanverlauf aber auch zwischen verschiedenen Glaskörperabschnitten 400, 400`. Im Stand der Technik wurden diese makroskopischen, herstellungsbedingten Schwankungen der einzelnen Titanverläufe zwischen verschiedenen Glaskörperabschnitten 400, 400' nicht weiter berücksichtigt. Vielmehr wurden bisher für Substratvorläufer 900 mit einer geringen Masse nur wenige, insbesondere nur zwei Glaskörperabschnitte 400, 400' benötigt, so dass die auftretenden Schwankungen zwischen den langwelligen Titanverläufen 410 in den Glaskörperabschnitten 400, 400' ignoriert werden konnten. Dies ist bei der Herstellung von Substratvorläufern mit einer Masse von mehr als 50 kg, insbesondere mehr als 100 kg nicht mehr möglich, insbesondere wenn wenigstens vier Glaskörperabschnitte miteinander verbunden werden müssen.

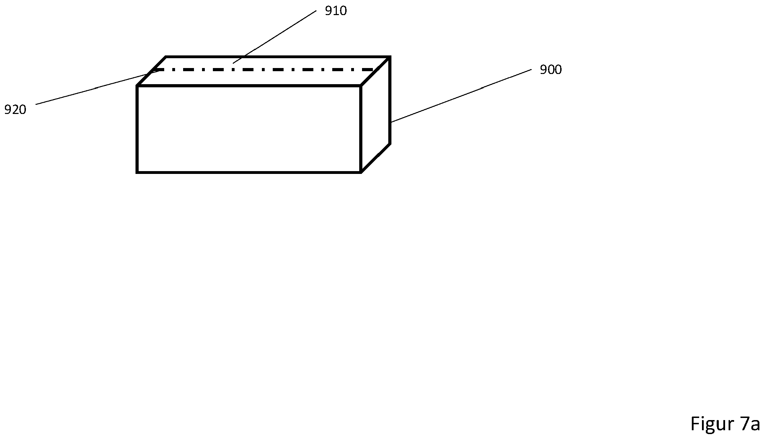

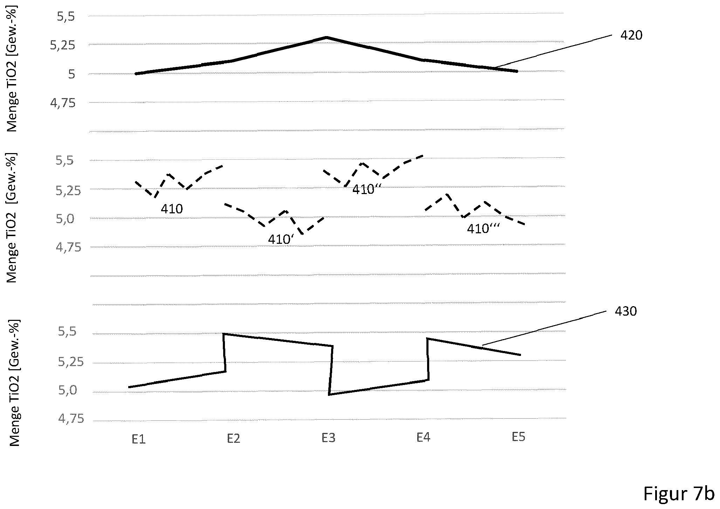

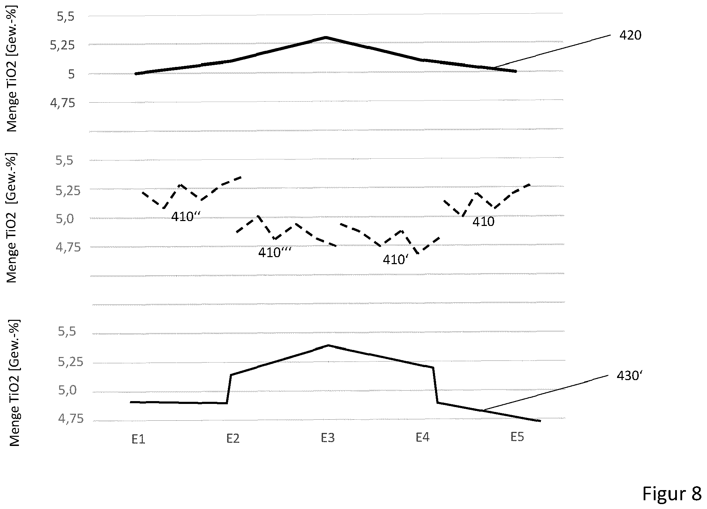

Die **Figur 7a****,** **7b** und die **Figur 8** verdeutlichen die im Rahmen des Schritts Vermessen 1300 genutzten Schritte, welche dazu dienen, die oben genannten Nachteile zu überwinden.

Es soll dargelegt werden, wie durch Permutation der Anordnung der Glaskörperabschnitte 400, 400', 400", 400‴ zueinander mit Hilfe des Modells jeweils eine Titanaufteilung 430 berechneten und mit der angestrebten Titanverteilung 420 verglichen wird.

Die im Folgenden beschriebenen Schritte und/oder Aspekte der Minimierung einer Differenz zwischen Titanaufteilung und Titanverteilung gelten auch für die Minimierung einer zweiten Differenz zwischen wenigstens einer Eigenschaftsaufteilung und wenigstens einer Eigenschaftsverteilung.

Ausgangspunkt ist ein Vorbestimmen 1400 einer anzustrebenden Titanverteilung 420 in dem Substratvorläufer. In einer Ausführungsvariante repräsentiert die Titanverteilung 420 die zweidimensionale Verteilung der Menge des TiO2 im dem Substratvorläufer, insbesondere entlang einer Mittellinie, insbesondere an der später zu verspiegelnden Außenfläche, durch den Substratvorläufer. Das Modell kann in dieser Ausführungsform aus den zweidimensional bestimmten Titanverläufen und deren Anordnung zueinander eine zweidimensionale Titanverteilung in dem Substratvorläufer berechnen.

In Figur 7a ist ein Substratvorläufer 900 gezeigt. Dieser soll optimalerweise eine Titanverteilung 420, wie in dem oberen Diagramm in Figur. 7b dargestellt, aufweisen. Es wird beispielhaft eine parabelförmige Titanverteilung 420 innerhalb eines Intervalls von 4,75 Gew.-% bis 5,5 Gew.-%. TiO2 angestrebt, die ein Maximum in einer Mitte des Substratvorläufers aufweist.

Die anzustrebende zweidimensionale Titanverteilung 420 kann in dem Substratvorläufer 900 auf der später zu verspiegelnden Außenfläche 910 entlang einer Mittellinie 920 zu finden sein. Die Art und Ausgestaltung der Titanverteilung 420 kann insbesondere von der Einsatzart und den Einsatzbedingungen des späteren EUV-Spiegels abhängig sein. Besonders bevorzugt ist eine Titanverteilung, die einen parabelförmigen (oder Gaußförmigen) Verlauf mit einem Maximum in der Mitte des Substratvorläufers aufweist, Insbesondere kann die Titanverteilung - und damit die CTE - an die Verteilung der einfallenden EUV-Strahlung angepasst sein.

Zur Verdeutlichung des Vorgehens wird in Figur 7b angenommen, dass der Substratvorläufer 900 aus nur vier Glaskörperabschnitten 400, 400', 400", 400‴ gebildet ist. Diese sind - analog zu Figur 6 - derart zueinander angeordnet, dass sich ein stangenartiger Glaskörper 300 bildet. Die vier Glaskörperabschnitte 400, 400', 400", 400‴ sind dabei in folgender Anordnung zum ersten Glasbauteils 600 zusammengefügt wurden:
- Endseite des Glaskörperabschnittes 400 wird mit der Stirnseite des Glaskörperabschnitte 400' verbunden (Punkt E2),
- Endseite des Glaskörperabschnittes 400' wird mit der Stirnseite des Glaskörperabschnitte 400" verbunden (Punkt E3),
- Endseite des Glaskörperabschnittes 400" wird mit der Stirnseite des Glaskörperabschnitte 400‴ verbunden (Punkt E4).

Im mittleren Diagramm in Figur 7b sind die Titanverläufe 410, 410', 410", 410‴ der vier Glaskörperabschnitten 400, 400', 400", 400‴ dargestellt, die aus wenigstens einem Glaskörper 300 erstellt wurden. Aufgetragen ist die Schar der Messwerte für die Mengen an TiO2 in Gew.-% in jedem der vier Glaskörperabschnitten 400, 400', 400", 400‴.

Um die oben genannten Nachteile zu überwinden, wird ein Modell genutzt, welches eine Titanaufteilung 430 in dem Substratvorläufer 900 errechnen kann. Dabei nutzt das Modell als Eingangsparameter:
- die Anordnung der Mehrzahl der Glaskörperabschnitte 400, 400', 400", 400‴ in dem ersten Glasbauteil 600 zueinander,
- die räumlichen Titanverläufe 410, 410', 410", 410‴ in jedem der Glaskörperabschnitte 400, 400', 400", 400‴, und
- die Auswirkungen des Schritts Zusammenschieben 1700 und des Schritts Wenden 1800 auf die räumlichen Titanverläufe 410, 410', 410", 410‴ in den Glaskörperabschnitten 400, 400', 400", 400‴.

Basierend auf dieser Anordnung berechnet das Modell die Titanaufteilung 430 in dem Substratvorläufer 900. Diese Titanaufteilung 430 ist in dem unteren Diagramm in Figur 7b dargestellt.

Wie Figur 7b verdeutlicht, entspricht der dargestellte Verlauf der errechneten Titanaufteilung 430 nicht einfachen einer linearen Aneinanderreihung der dargestellten Verläufe der Titanverläufe 410, 410', 410", 410‴ in der angenommenen Anordnung. Vielmehr führen die Verfahrensschritte des hier offenbarten Verfahrens dazu, dass die räumliche Position und Lage eines Titanverlaufs 410, 410', 410", 410‴ nach einem Durchlaufen des Verfahrens nicht mehr jener räumlichen Position entspricht, die der zum Titanverlauf entsprechende Glaskörperabschnitt 400, 400', 400", 400‴ im ersten Glaskörper 300 hatte. So ändert sich die räumliche Lage des Titanverlaufs 410, 410', 410", 410‴ derart, dass es eines Modells bedarf, um die Position und Menge des TiO2 in der Titanaufteilung 430 des Substratvorläufers 900 zu berechnen.

Die in Figur 7b dargestellte errechnete Titanaufteilung 430 weist einen zickzackförmigen Verlauf auf und weicht somit stark von der angestrebten parabelförmigen Titanverteilung 420 ab.

Um eine optimale Anordnung zu erzielen, werden die möglichen Anordnungen der Glaskörperabschnitte permutiert. Im Modell werden die Auswirkungen aller möglichen Anordnungen der Glaskörperabschnitte auf die Titanaufteilung 430 berechnet. Dies soll Figur 8 verdeutlichen. Ausgangspunkt ist eine gegenüber Figur 7 abweichende Anordnung der vier Glaskörperabschnitte 400, 400', 400", 400‴, welche in der folgender Anordnung zum ersten Glasbauteils 600 zusammengefügt sind:
- Endseite des Glaskörperabschnittes 400" wird mit der Stirnseite des Glaskörperabschnitte 400‴ verbunden (Punkt E2),
- Endseite des Glaskörperabschnittes 400‴ wird mit der Stirnseite des Glaskörperabschnitte 400' verbunden (Punkt E3),
- Endseite des Glaskörperabschnittes 400' wird mit der Stirnseite des Glaskörperabschnitte 400 verbunden (Punkt E4).

Das Modell errechnet aus den Titanverläufen 410", 410‴, 410`, 410 eine Titanaufteilung 430` in dem Substratvorläufer 900. Diese Titanaufteilung 430' ist sowohl im Betrag als auch im Verlauf der anzustrebenden Titanverteilung 420 ähnlicher als die in Figur 7b dargestellte Titanaufteilung 430.

Das Modell berechnet insbesondere aus jeder möglichen Anordnung der Glaskörperabschnitte 400, 400', 400", 400‴ die entsprechende Titanaufteilung 430, 430' und vergleicht diese gegen die anzustrebende Titanverteilung 420. Dazu werden alle möglichen Anordnungen der Glaskörperabschnitte 400, 400', 400", 400‴ permutiert. Basierend auf diesen Informationen bildet das Modell jeweils eine Differenz zwischen Titanaufteilung und Titanverteilung 420. Die optimale Anordnung ist jene Anordnung, in welcher der Betrag der Differenz, insbesondere der maximale Differenzbetrag zwischen zwei räumlich gleichen Punkten auf dem Substratvorläufer minimal ist.

Anschließend erfolgt ein Positionieren und Verbinden der Glaskörperabschnitte 400, 400', 400", 400‴ gemäß der optimalen Anordnung.

Analog kann wenigstens eine Eigenschaftsverteilung neben der Titanverteilung eine zweite Zielgröße darstellen, die optimalerweise in dem Substratvorläufer 900 erfüllt und/oder angestrebt wird. Das in dieser Ausführungsvariante genutzte Modell ist funktional abhängig von
- einer Anordnung der Mehrzahl der Glaskörperabschnitte 400, 400', 400", 400‴ in dem ersten Glasbauteil 600 zueinander,
- dem räumlichen Titanverlauf 410, 410', 410", 410‴ und einem räumlichen Eigenschaftsverlauf 510 in jedem der Glaskörperabschnitte 400, 400', 400", 400‴, und
- den Auswirkungen des Schritts Zusammenschieben und des Schritts Wenden auf den räumlichen Titanverlauf 410, 410', 410", 410‴ und auf den räumlichen Eigenschaftsverlauf 510 in den Glaskörperabschnitten 400, 400', 400", 400‴.

Es werden folglich sowohl die das Element Titandioxid betreffenden Aspekte als auch die wenigstens eine weitere Eigenschaft (z.B. ODC, Ti3+ etc.) betreffenden Aspekte bei der Berechnung der optimalen Anordnung der Glaskörperabschnitte berücksichtigt.

Basierend auf dem Lösungsraum an möglichen Anordnungen der Glaskörperabschnitte zueinander wird eine bestmögliche Anordnung der Glaskörperabschnitte 400, 400', 400", 400‴ bestimmt. Ziel ist dabei, dass die Summendifferenz minimal ist, wobei die Summendifferenz
- die Differenz zwischen Titanaufteilung und Titanverteilung und
- die zweite Differenz zwischen der wenigstens einen Eigenschaftsaufteilung und der wenigstens einen Eigenschaftsverteilung umfasst.

In der **Figur 9** ist eine erste Homogenisierungsbehandlung 1600 des ersten Glasbauteils 600 dargestellt, welches aus den Glaskörperabschnitten 400", 400‴, 400', 400 erstellt ist. Sowohl der Glaskörper als auch das aus den Glaskörperabschnitten 400", 400‴, 400', 400 erstellte erste Glasbauteil 600, weisen mikroskopische, herstellungsbedingte Schichtstrukturen auf. Um dies zu reduzieren und/oder die Herstellung eines im Wesentlichen schichtstrukturfreien Substratvorläufers 900 zu ermöglichen, werden sequenziell zwei Homogenisierungsbehandlungen durchgeführt.

In der ersten Homogenisierungsbehandlung 1600 wird das erste Glasbauteil 600 in eine mit einem oder mehreren Brennern 220 ausgestattete Glasdrehbank 605 eingespannt und anhand eines Umformprozesses homogenisiert, wie in der EP 673 888 A1 zum Zweck der vollständigen Entfernung von Schichtstrukturen beschrieben ist.

Die Glasdrehbank 605 weist zwei Spannfutter 610, 610' auf, die unabhängig voneinander in Rotation 650, 650` gesetzt werden können. Zwischen den zwei Spannfuttern 610, 610` ist das erste Glasbauteil 600 eingespannt. Zwei Halteelemente 620,620' können eine bessere Passung zwischen den Spannfuttern 610, 610' und dem ersten Glasbauteil 600 sicherstellen. Mittels des Brenners 220 wird das erste Glasbauteil 600 punktuell erhitzt und dabei erweicht, so dass eine Scherzone 630 entsteht. Diese Scherzone 630 erlaubt ein Einbringen einer äußeren Kraft, wie eine Torsionskraft, Zug- oder Druckkraft, auf das stabförmige erste Glasbauteil 600. Innerhalb der Scherzone 630 entstehen dadurch Bereiche, die verschiedene Spannungen aufweisen oder unterschiedliche Bewegungen erfahren, was mit einer Scherwirkung oder Dehn- und Stauchwirkung einhergeht. Um diese Kraft zu erzeugen, können die beiden Spannfutter 610, 610` in jeweils entgegengesetzter Richtung rotieren 650, 650`.

Bei der ersten Homogenisierungsbehandlung 1600 werden mikroskopische, herstellungsbedingte Schichtstrukturen in einer Ebene der Scherzone des ersten Glasbauteils 600 wirksam reduziert. Allerdings ist die Reduktion von mikroskopischen, herstellungsbedingten Schichtstrukturen senkrecht zur Ebene der Scherzone des ersten Glasbauteils 600 wesentlich geringer.

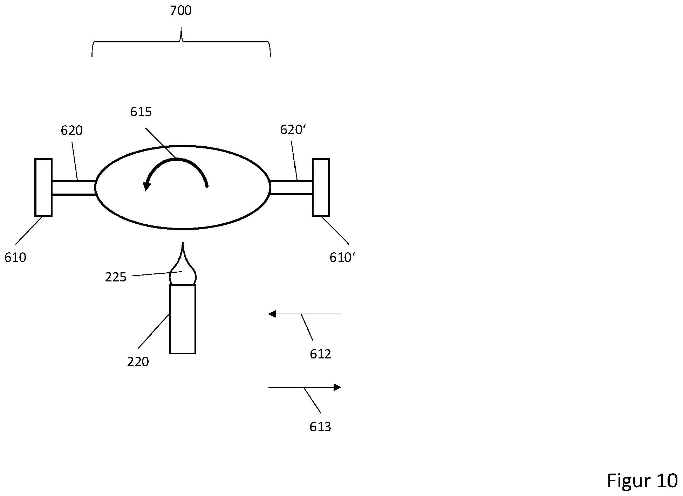

Um die verbleibenden Reste der Schichtstrukturen in einer zweiten Homogenisierungsbehandlung 2000 zu beseitigen, muss das erste Glasbauteil 600 umgeformt werden. Die **Figur 10** verdeutlicht ein Zusammenschieben 1700 des ersten Glasbauteils 600, um ein kugelförmiges Glassystem 700 zu erstellen. Dazu wird das erste Glasbauteil 600 mittels des Brenners 220 erhitzt und gestaucht. Das Zusammenschieben 1700 kann dadurch erfolgen, dass die beiden Spannfutter 610,610' aufeinander zubewegt werden, was der Bewegungspfeil 612 verdeutlicht. Anschließend erfolgt ein Wenden 1800 des Glassystems 700 um mehr als 70 Grad. Dazu wird das Glassystem 700 aus den Spannfuttern 610,610' entfernt und rotiert, was der Bewegungspfeil 615 verdeutlichen soll. Diese Rotation stellt sicher, dass in der zweiten Homogenisierungsbehandlung 2000 derjenige Anteil der Schichtstruktur wirksam reduziert werden kann, der in der ersten Homogenisierungsbehandlung 1600 nur wenig oder gar nicht ausgeglichen wurde. Nach dem Wenden 1800 des Glassystems 700 um mehr als 70 Grad wird dieses wieder in die Spannfutter 610,610' eingespannt. Anschließend erfolgt ein Auseinanderziehen 1900 des Glassystems 700. Diese mechanische Umformung des kugelförmigen Glassystems 700 in ein längliches zweites Glasbauteil 800 erfolgt durch ein Erhitzen des Glassystems 700 mit dem Brenner 220 und ein voneinander Wegbewegen der Spannfutter 610,610`, was der Bewegungspfeil 613 verdeutlicht.

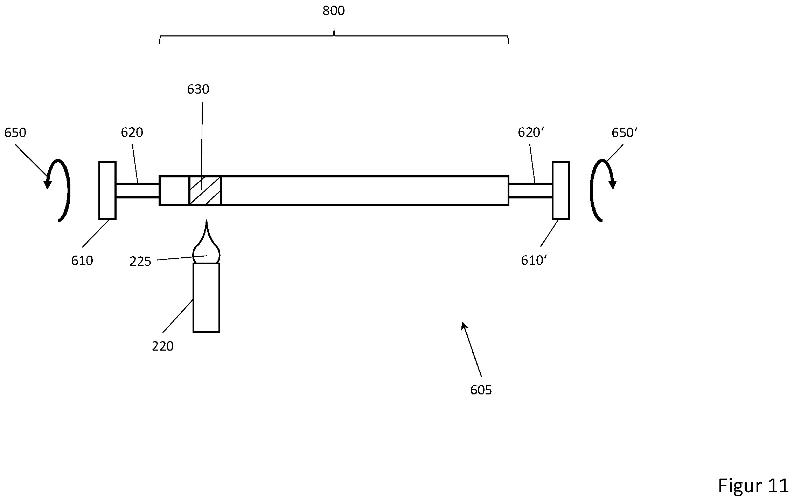

In der **Figur 11** ist eine zweite Homogenisierungsbehandlung 2000 des zweiten Glasbauteils 800 dargestellt. Die zweite Homogenisierungsbehandlung 2000 verläuft im Wesentlichen analog zu der ersten Homogenisierungsbehandlung 1600. Der entscheidende Unterschied besteht darin, dass durch das Wenden 1800 nunmehr jene Schichtstruktur in Richtung der Längsachse der Glasdrehbank 605 liegt, die vorher im Wesentlichen senkrecht zu der Längsachse der Glasdrehbank 605 lag. Zwischen den zwei Spannfuttern 610,610` der Glasdrehbank 605 ist das zweite Glasbauteil 800 eingespannt. Mittels des Brenners 220 wird das zweite Glasbauteil 800 punktuell erhitzt und dabei erweicht, so dass eine zweite Scherzone 640 entsteht. Diese zweite Scherzone 640 erlaubt ein Einbringen einer äußeren Kraft, wie eine Torsionskraft, Zug- oder Druckkraft, auf das stabförmige zweite Glasbauteil 800. Innerhalb der zweiten Scherzone 640 entstehen dadurch Bereiche, die verschiedene Spannungen aufweisen oder unterschiedliche Bewegungen erfahren, was mit einer Scherwirkung oder Dehn- und Stauchwirkung einhergeht. Um diese Kraft zu erzeugen, können die beiden Spannfutter 610, 610` in jeweils entgegengesetzter Richtung rotieren 650, 650`.

Bei dieser zweiten Homogenisierungsbehandlung 2000 werden mikroskopische, herstellungsbedingte Schichtstrukturen in Richtung senkrecht zur Längsachse des ersten Glasbauteils 600 und/oder in Richtung einer Längsachse des zweiten Glasbauteils 800 wirksam reduziert. Nach dem Durchlaufen sowohl der ersten Homogenisierungsbehandlung 1600 als auch der zweiten Homogenisierungsbehandlung 2000 entsteht ein Substratvorläufer 900, der im Wesentlichen schichtstrukturfrei ist.

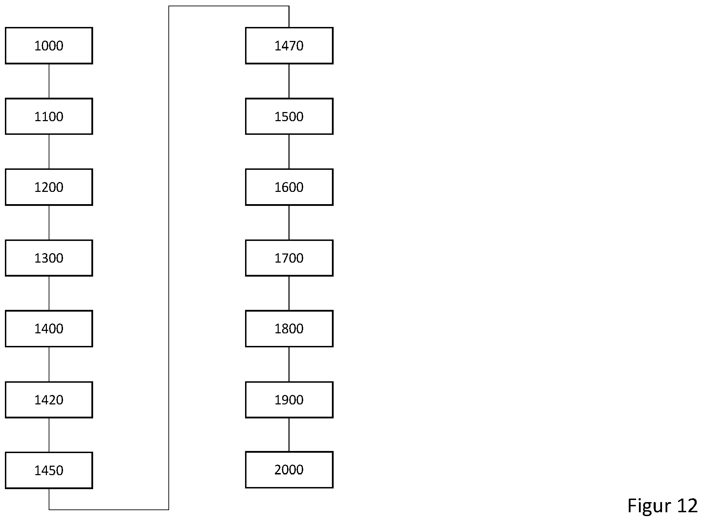

In der **Figur 12** ist ein Verlauf des Verfahrens zur Herstellung eines Substratvorläufers 900 mit einer Masse von mehr als 100 kg, aufweisend ein TiO2-SiO2-Mischglas, dargestellt. Es umfasst die Schritte:
- Einbringen 1000 eines Siliziumdioxid-Rohmaterials und eines Titandioxid-Rohmaterials in eine Flamme,
- Herstellen 1100 eines Glaskörpers mit einem Titandioxidgehalt von 3 Gew.-% bis zu 10 Gew.-%, wobei der Glaskörper:
   - einen makroskopischen, herstellungsbedingten Titanverlauf aufweist, und
   - eine mikroskopische, herstellungsbedingte Schichtstruktur aufweist,
- Aufteilen 1200 des Glaskörpers in eine Mehrzahl von stangenartigen Glaskörperabschnitten,
- Räumliches Vermessen 1300 des Titanverlaufs in jedem der Glaskörperabschnitte,
- Verbinden 1500 der Glaskörperabschnitte zur Bildung eines länglichen ersten Glasbauteils,
- Erste Homogenisierungsbehandlung 1600 des ersten Glasbauteils,
- Zusammenschieben 1700 des ersten Glasbauteils, um ein kugelförmiges Glassystem zu erstellen,
- Wenden 1800 des Glassystems um mehr als 70 Grad,
- Auseinanderziehen 1900 des Glassystems zur Bildung eines länglichen zweiten Glasbauteils,
- Zweite Homogenisierungsbehandlung 2000 des zweiten Glasbauteils, um einen Substratvorläufer 900 zu erstellen, wobei der Substratvorläufer 900 im Wesentlichen schichtstrukturfrei ist.

Das Verfahren zeichnet sich dadurch aus, dass der Schritt Vermessen 1300 folgende Schritte umfasst:
- Vorbestimmen 1400 einer anzustrebenden, räumlichen Titanverteilung in dem Substratvorläufer 900,
- Bereitstellen 1420 eines Modells einer Titanaufteilung in dem Substratvorläufer 900, wobei das Modell abhängig ist von
   - einer Anordnung der Mehrzahl der Glaskörperabschnitte in dem ersten Glasbauteil zueinander,
   - dem räumlichen Titanverlauf in jedem der Glaskörperabschnitte, und
   - den Auswirkungen des Schritts Zusammenschieben und des Schritts Wenden auf die räumlichen Titanverläufe in den Glaskörperabschnitten,
- Berechnen 1450 einer optimalen Anordnung der Glaskörperabschnitte zueinander mittels des Modells, so dass eine Differenz zwischen Titanaufteilung und Titanverteilung minimal ist,
- Positionieren 1470 der Glaskörperabschnitte, so dass im Schritt Verbinden die Glaskörperabschnitte gemäß der berechneten optimalen Anordnung verbunden werden.

### Bezugszeichen

- 100: Vorrichtung
- 200: Sootkörper
- 210: Trägerrohr
- 220: Brenner oder Flammhydrolysebrenner
- 225: Flamme
- 250: Verglasungsofen
- 251: Bewegungspfeil

- 300: Glaskörper

- 400, 400', 400": Glaskörperabschnitt
- 401, 401': Kontaktfläche
- 410, 400', 400", 400‴: Titanverlauf
- 420: Titanverteilung
- 430: Titanaufteilung
- 440: Längsachse

- 510: Eigenschaftsverlauf

- 600: Erstes Glasbauteil
- 605: Glasdrehbank
- 610, 610`: Spannfutter
- 612: Bewegungspfeil
- 613: Bewegungspfeil
- 615: Bewegungspfeil
- 620, 620': Zwei Haltelemente
- 630: Scherzone
- 640: Zweite Scherzone
- 650, 650': Rotation
- 700: Kugelförmiges Glassystem

- 800: Zweites Glasbauteil

- 900: Substratvorläufer
- 910: Außenfläche
- 920: Mittellinie

- 1000: Einbringen
- 1100: Herstellen
- 1200: Aufteilen
- 1300: Räumliches Vermessen
- 1400: Vorbestimmen
- 1420: Bereitstellen eines Modells
- 1450: Berechnen einer optimalen Anordnung
- 1470: Positionieren der Glaskörperabschnitte
- 1500: Verbinden der Glaskörperabschnitte
- 1600: Erste Homogenisierungsbehandlung
- 1700: Zusammenschieben
- 1800: Wenden des Glassystems
- 1900: Auseinanderziehen
- 2000: Zweite Homogenisierungsbehandlung

## Patentansprüche

1. Verfahren zur Herstellung eines Substratvorläufers (900) mit einer Masse von mehr als 50 kg, aufweisend ein TiO2-SiO2-Mischglas umfassend die Schritte:
• Einbringen (1000) eines Siliziumdioxid-Rohmaterials und eines Titandioxid-Rohmaterials in eine Flamme (225),
• Herstellen (1100) eines Glaskörpers (300) mit einem Titandioxidgehalt von 3 Gew.-% bis zu 10 Gew.-%, wobei der Glaskörper (300):
• einen makroskopischen, herstellungsbedingten Titanverlauf (410, 410', 410", 410‴), und
• eine mikroskopische, herstellungsbedingte Schichtstruktur aufweist,
• Aufteilen (1200) des Glaskörpers in eine Mehrzahl von stangenartigen Glaskörperabschnitten (400, 400`, 400", 400‴),
• Räumliches Vermessen (1300) des Titanverlaufs (410, 410`, 410", 410‴) in jedem der Glaskörperabschnitte (400, 400`, 400", 400‴),
• Verbinden (1500) der Glaskörperabschnitte (400, 400`, 400", 400‴) zur Bildung eines länglichen ersten Glasbauteils (600),
• Erste Homogenisierungsbehandlung (1600) des ersten Glasbauteils (600),
• Zusammenschieben (1700) des ersten Glasbauteils (600), um ein kugelförmiges Glassystem (700) zu erstellen,
• Wenden (1800) des Glassystems (700) um mehr als 70 Grad,
• Auseinanderziehen (1900) des Glassystems (700) zur Bildung eines länglichen zweiten Glasbauteils (800),
• Zweite Homogenisierungsbehandlung (2000) des zweiten Glasbauteils (800), um einen Substratvorläufer (900) zu erstellen, wobei der Substratvorläufer (900) im Wesentlichen schichtstrukturfrei ist,
**dadurch gekennzeichnet, dass**
der Schritt Vermessen folgende Schritte umfasst:
• Vorbestimmen (1400) einer anzustrebenden, räumlichen Titanverteilung (420) in dem Substratvorläufer (900),
• Bereitstellen (1420) eines Modells einer Titanaufteilung (430) in dem Substratvorläufer (900), wobei das Modell abhängig ist von
• einer Anordnung der Mehrzahl der Glaskörperabschnitte (400, 400`, 400", 400‴) in dem ersten Glasbauteil (600) zueinander,
• dem räumlichen Titanverlauf (410, 410', 410", 410‴) in jedem der Glaskörperabschnitte (400, 400`, 400", 400‴), und
• den Auswirkungen des Schritts Zusammenschieben (1700) und des Schritts Wenden (1800) auf die räumlichen Titanverläufe (410, 410`, 410", 410‴) in den Glaskörperabschnitten,
• Berechnen (1450) einer optimalen Anordnung der Glaskörperabschnitte (400, 400`, 400", 400‴) zueinander mittels des Modells, so dass eine Differenz zwischen Titanaufteilung (430) und Titanverteilung (420) minimal ist,
• Positionieren (1470) der Glaskörperabschnitte (400, 400`, 400", 400‴), so dass im Schritt Verbinden (1500) die Glaskörperabschnitte (400, 400`, 400", 400‴) gemäß der berechneten optimalen Anordnung verbunden werden.

2. Verfahren nach Anspruch 1, **dadurch gekennzeichnet, dass** der Substratvorläufer (900) eine Masse von mehr als 100 kg, insbesondere mehr als 200 kg, insbesondere mehr als 300 kg aufweist.

3. Verfahren nach einem der Ansprüche 1 oder 2, **dadurch gekennzeichnet, dass** das Verfahren den folgenden Schritt umfasst:
• Herstellen eines zweiten Glaskörpers mit einem Titandioxidgehalt von 3 Gew.-% bis zu 10 Gew.-%, wobei der zweite Glaskörper:
• einen zweiten, makroskopischen, herstellungsbedingten Titanverlauf aufweist, und
• eine zweite, mikroskopische, herstellungsbedingte Schichtstruktur aufweist,
• Aufteilen des zweiten Glaskörpers in eine Mehrzahl von stangenartigen Glaskörperabschnitten.

4. Verfahren nach mindestens einem der vorherigen Ansprüche, **dadurch gekennzeichnet, dass** zur Bildung des ersten Glasbauteils mindestens drei, insbesondere mindestens fünf, insbesondere mindestens acht Glaskörperabschnitte verbunden werden.

5. Verfahren nach mindestens einem der vorherigen Ansprüche, **dadurch gekennzeichnet, dass** die Differenz zwischen Titanaufteilung (430) und Titanverteilung (420) weniger als 1,5 % bezogen auf einen Maximalwert der Titanverteilung (420) beträgt, insbesondere weniger als 1,0 %, insbesondere weniger als 0,5 %.

6. Verfahren nach mindestens einem der Ansprüche 1 bis 5, **dadurch gekennzeichnet, dass** der Glaskörper wenigstens einen der folgenden Eigenschaftsverläufe (510) aufweist:
• einen makroskopischen, herstellungsbedingten OH-Verlauf,
• einen makroskopischen, herstellungsbedingten CTE-Verlauf,
• einen makroskopischen, herstellungsbedingten Fluor-Verlauf,
• einen makroskopischen, herstellungsbedingten Blasen-Verlauf,
• einen makroskopischen, herstellungsbedingten ODC-Verlauf,
• einen makroskopischen, herstellungsbedingten Ti3+-Verlauf,
• einen makroskopischen, herstellungsbedingten Verlauf von metallischen Verunreinigungen.

7. Verfahren nach Anspruch 6, **dadurch gekennzeichnet, dass** im Schritt Vermessen wenigstens einer der Eigenschaftsverläufe (510) in jedem der Glaskörperabschnitte (400, 400', 400", 400‴) vermessen wird.

8. Verfahren nach Anspruch 7, **dadurch gekennzeichnet, dass** der Schritt Vermessen folgende Schritte umfasst:
• Vorbestimmen einer anzustrebenden, räumlichen Eigenschaftsverteilung in dem Substratvorläufer (900),
• Bereitstellen eines Modells einer Eigenschaftsaufteilung in dem Substratvorläufer (900), wobei das Modell abhängig ist von
• einer Anordnung der Mehrzahl der Glaskörperabschnitte in dem ersten Glasbauteil zueinander,
• einem räumlichen Eigenschaftsverlauf (510) in jedem der Glaskörperabschnitte, und
• den Auswirkungen des Schritts Zusammenschieben und des Schritts Wenden auf den räumlichen Eigenschaftsverlauf in den Glaskörperabschnitten,
• Berechnen einer bestmöglichen Anordnung der Glaskörperabschnitte (400, 400`, 400", 400‴) zueinander mittels des Modells, so dass eine Summendifferenz minimal ist, wobei die Summendifferenz
• die Differenz zwischen Titanaufteilung (430) und Titanverteilung (420) und
• die zweite Differenz zwischen der Eigenschaftsaufteilung und Eigenschaftsverteilung aufweist,
• Positionieren der Glaskörperabschnitte (400, 400', 400", 400‴), so dass in Schritt Verbinden (1500) die Glaskörperabschnitte (400, 400', 400", 400‴) gemäß der berechneten bestmöglichen Anordnung verbunden werden.

9. Verfahren nach Anspruch 8, **dadurch gekennzeichnet, dass** die Summendifferenz weniger als 1,5 %bezogen auf eine Summe eines Maximalwerts der Titanverteilung (420) und eines Maximalwerts der Eigenschaftsverteilung beträgt, insbesondere weniger als 1,0 %, insbesondere weniger als 0,5 %.

10. Verfahren nach mindestens einem der vorherigen Ansprüche, **dadurch gekennzeichnet, dass** der Schritt Herstellen (1100) des Glaskörpers wenigstens folgende Schritte umfasst:
• Erstellen eines porösen Sootkörpers (200), wobei der makroskopische, herstellungsbedingte Titanverlauf im Wesentlichen entlang einer Längsachse und die mikroskopische, prozessbedingte Schichtstruktur im Wesentlichen entlang einer Wachstumsachse verläuft,
• Verglasen des Sootkörpers, um den zylindrischen Glaskörper zu erstellen.

11. Verfahren nach mindestens einem der vorherigen Ansprüche, **dadurch gekennzeichnet, dass** das erste Glasbauteil (600) vor dem Schritt Zusammenschieben (1700) erhitzt wird.

12. Verfahren nach mindestens einem der vorherigen Ansprüche, **dadurch gekennzeichnet, dass** das Verbinden (1500) an einer jeweiligen Kontaktfläche (401) der Glaskörperabschnitte (400, 400', 400", 400‴) erfolgt.

## Claims

1. A method for producing a substrate precursor (900) having a mass of more than 50 kg, comprising a TiO2-SiO2 mixed glass, comprising the steps of:
• introducing (1000) a silicon dioxide raw material and a titanium dioxide raw material into a flame (225),
• producing (1100) a glass body (300) having a titanium dioxide content of 3 wt.% up to 10 wt.%, the glass body (300) comprising:
• a macroscopic, production-related titanium profile (410, 410', 410", 410‴), and
• a microscopic, production-related layer structure,
• dividing (1200) the glass body into a plurality of rod-like glass body portions (400, 400', 400", 400‴),
• spatially measuring (1300) the titanium profile (410, 410', 410", 410‴) in each of the glass body portions (400, 400', 400", 400‴),
• connecting (1500) the glass body portions (400, 400', 400", 400‴) to form an elongate first glass component (600),
• first homogenization treatment (1600) of the first glass component (600),
• pushing together (1700) the first glass component (600) in order to produce a spherical glass system (700),
• turning (1800) the glass system (700) by more than 70 degrees,
• pulling apart (1900) the glass system (700) to form an elongate second glass component (800),
• second homogenization treatment (2000) of the second glass component (800) in order to produce a substrate precursor (900), the substrate precursor (900) being substantially layer-structure-free,
**characterized in that**
the step of measuring comprises the following steps:
• predetermining (1400) a desired spatial titanium distribution (420) in the substrate precursor (900),
• providing (1420) a model of a titanium partition (430) in the substrate precursor (900), the model being dependent on
• an arrangement of the plurality of glass body portions (400, 400', 400", 400‴) in the first glass component (600) relative to one another,
• the spatial titanium profile (410, 410', 410", 410‴) in each of the glass body portions (400, 400', 400", 400‴), and
• the effects of the step of pushing together (1700) and the step of turning (1800) on the spatial titanium profiles (410, 410', 410", 410‴) in the glass body portions,
• calculating (1450) an optimal arrangement of the glass body portions (400, 400', 400", 400‴) relative to one another using the model, so that a difference between the titanium partition (430) and the titanium distribution (420) is minimal,
• positioning (1470) the glass body portions (400, 400', 400", 400‴) so that in the step of connecting (1500) the glass body portions (400, 400', 400", 400‴) are connected according to the calculated optimal arrangement.

2. The method according to claim 1, **characterized in that** the substrate precursor (900) has a mass of more than 100 kg, in particular more than 200 kg, in particular more than 300 kg.

3. The method according to either claim 1 or claim 2, **characterized in that** the method comprises the following step:
• producing a second glass body having a titanium dioxide content of 3 wt.% up to 10 wt.%, the second glass body comprising:
• a second, macroscopic, production-related titanium profile, and
• a second microscopic, production-related layer structure,
• dividing the second glass body into a plurality of rod-like glass body portions.

4. The method according to at least one of the preceding claims, **characterized in that** at least three, in particular at least five, in particular at least eight glass body portions are connected to form the first glass component.

5. The method according to at least one of the preceding claims, **characterized in that** the difference between the titanium partition (430) and the titanium distribution (420) is less than 1.5% based on a maximum value of the titanium distribution (420), in particular less than 1.0%, in particular less than 0.5%.

6. The method according to at least one of claims 1 to 5, **characterized in that** the glass body has at least one of the following property profiles (510):
• a macroscopic, production-related OH profile,
• a macroscopic, production-related CTE profile,
• a macroscopic, production-related fluorine profile,
• a macroscopic, production-related bubble profile,
• a macroscopic, production-related ODC profile,
• a macroscopic, production-related Ti3+ profile,
• a macroscopic, production-related profile of metal contamination.

7. The method according to claim 6, **characterized in that** in the step of measuring, at least one of the property profiles (510) in each of the glass body portions (400, 400', 400", 400‴) is measured.

8. The method according to claim 7, **characterized in that** the step of measuring comprises the following steps:
• predetermining a desired spatial property distribution in the substrate precursor (900),
• providing a model of a property partition in the substrate precursor (900), the model being dependent on
• an arrangement of the plurality of glass body portions in the first glass component relative to one another,
• a spatial property profile (510) in each of the glass body portions, and
• the effects of the step of pushing together and the step of turning on the spatial property profile in the glass body portions,
• calculating the best possible arrangement of the glass body portions (400, 400', 400", 400‴) relative to one another using the model, so that a total difference is minimal, the total difference comprising
• the difference between the titanium partition (430) and the titanium distribution (420) and
• the second difference between the property partition and property distribution,
• positioning the glass body portions (400, 400', 400", 400‴) so that in the step of connecting (1500), the glass body portions (400, 400', 400", 400‴) are connected according to the calculated best possible arrangement.

9. The method according to claim 8, **characterized in that** the total difference is less than 1.5% based on a sum of a maximum value of the titanium distribution (420) and a maximum value of the property distribution, in particular less than 1.0%, in particular less than 0.5%.

10. The method according to at least one of the preceding claims, **characterized in that** the step of producing (1100) the glass body comprises at least the following steps:
• producing a porous soot body (200), the macroscopic, production-related titanium profile extending substantially along a longitudinal axis and the microscopic, process-related layer structure extending substantially along a growth axis,
• vitrifying the soot body in order to produce the cylindrical glass body.

11. The method according to at least one of the preceding claims, **characterized in that** the first glass component (600) is heated before the step of pushing together (1700).

12. The method according to at least one of the preceding claims, **characterized in that** the connection (1500) takes place at a particular contact surface (401) of the glass body portions (400, 400', 400", 400‴).

## Revendications

1. Procédé destiné à fabriquer un précurseur de substrat (900) comportant une masse supérieure à 50 kg, présentant un verre mixte TiO2-SiO2, comprenant les étapes consistant à :
• introduire (1000) un matériau brut de dioxyde de silicium et un matériau brut de dioxyde de titane dans une flamme (225),
• fabriquer (1100) un corps en verre (300) comportant une teneur en dioxyde de titane allant de 3 % en poids à 10 % en poids, le corps en verre (300) présentant :
• un gradient de titane (410, 410`, 410", 410‴) macroscopique dû à la fabrication, et
• une structure en couches microscopique due à la fabrication,
• répartir (1200) le corps en verre en une pluralité de sections de corps en verre (400, 400`, 400", 400‴) en forme de tige,
• mesurer (1300) spatialement le gradient de titane (410, 410`, 410", 410‴) dans chacune des sections de corps en verre (400, 400`, 400", 400‴),
• relier (1500) les sections de corps en verre (400, 400`, 400", 400‴) pour la formation d'un premier composant en verre (600) allongé,
• effectuer un premier traitement d'homogénéisation (1600) du premier composant en verre (600),
• rapprocher (1700) le premier composant en verre (600) afin de créer un système en verre (700) sphérique,
• faire tourner (1800) le système en verre (700) de plus de 70 degrés,
• écarter (1900) le système en verre (700) pour la formation d'un second composant en verre (800) allongé,
• effectuer un second traitement d'homogénéisation (2000) du second composant en verre (800) afin de créer un précurseur de substrat (900), le précurseur de substrat (900) étant sensiblement exempt de structure en couches,
**caractérisé en ce que**
l'étape de mesure comprend les étapes suivantes :
• prédétermination (1400) d'une distribution de titane (420) spatiale souhaitable dans le précurseur de substrat (900),
• fourniture (1420) d'un modèle d'une répartition de titane (430) dans le précurseur de substrat (900), le modèle dépendant
• d'une disposition de la pluralité de sections de corps en verre (400, 400`, 400", 400‴) dans le premier composant en verre (600) les unes par rapport aux autres,
• du gradient de titane (410, 410`, 410", 410‴) spatial dans chacune des sections de corps en verre (400, 400`, 400", 400‴), et
• des effets de l'étape de rapprochement (1700) et de l'étape de rotation (1800) sur les gradients de titane (410, 410', 410", 410‴) spatiaux dans les sections de corps en verre,
• calcul (1450) d'une disposition optimale des sections de corps en verre (400, 400`, 400", 400‴) les unes par rapport aux autres au moyen du modèle, de sorte qu'une différence entre la répartition de titane (430) et la distribution de titane (420) est minimale,
• positionnement (1470) des sections de corps en verre (400, 400`, 400", 400‴) de sorte que, dans l'étape de liaison (1500), les sections de corps en verre (400, 400', 400", 400‴) sont reliées selon la disposition optimale calculée.

2. Procédé selon la revendication 1, **caractérisé en ce que** le précurseur de substrat (900) présente une masse supérieure à 100 kg, en particulier supérieure à 200 kg, en particulier supérieure à 300 kg.

3. Procédé selon l'une des revendications 1 ou 2, **caractérisé en ce que** le procédé comprend l'étape suivante :
• fabrication d'un second corps en verre comportant une teneur en dioxyde de titane allant de 3 % en poids à 10 % en poids, le second corps en verre présentant :
• un second gradient de titane macroscopique dû à la fabrication, et
• une seconde structure en couches microscopique due à la fabrication,
• répartition du second corps en verre en une pluralité de sections de corps en verre en forme de tige.

4. Procédé selon au moins l'une des revendications précédentes, **caractérisé en ce que**, pour la formation du premier composant en verre, au moins trois, en particulier au moins cinq, en particulier au moins huit sections de corps en verre sont reliées.

5. Procédé selon au moins l'une des revendications précédentes, **caractérisé en ce que** la différence entre la répartition de titane (430) et la distribution de titane (420) est inférieure à 1,5 % par rapport à une valeur maximale de la distribution de titane (420), en particulier inférieure à 1,0 %, en particulier inférieure à 0,5 %.

6. Procédé selon au moins l'une des revendications 1 à 5, **caractérisé en ce que** le corps en verre présente au moins l'un des gradients de propriétés (510) suivants :
• un gradient d'OH macroscopique dû à la fabrication,
• un gradient de CTE macroscopique dû à la fabrication,
• un gradient de fluor macroscopique dû à la fabrication,
• un gradient de bulles macroscopique dû à la fabrication,
• un gradient d'ODC macroscopique dû à la fabrication,
• un gradient de Ti3+ macroscopique dû à la fabrication,
• un gradient d'impuretés métalliques macroscopique dû à la fabrication.

7. Procédé selon la revendication 6, **caractérisé en ce que**, dans l'étape de mesure, au moins l'un des gradients de propriétés (510) est mesuré dans chacune des sections de corps en verre (400, 400', 400", 400‴).

8. Procédé selon la revendication 7, **caractérisé en ce que** l'étape de mesure comprend les étapes suivantes :
• prédétermination d'une distribution de propriétés spatiale souhaitable dans le précurseur de substrat (900),
• fourniture d'un modèle d'une répartition de propriétés dans le précurseur de substrat (900), le modèle dépendant
• d'une disposition de la pluralité de sections de corps en verre dans le premier composant en verre les unes par rapport aux autres,
• d'un gradient de propriétés (510) spatial dans chacune des sections de corps en verre, et
• des effets de l'étape de rapprochement et de l'étape de rotation sur le gradient de propriétés spatial dans les sections de corps en verre,
• calcul, au moyen du modèle, d'une disposition optimale des sections de corps en verre (400, 400', 400", 400‴) les unes par rapport aux autres, de sorte qu'une somme de différences est minimale, la somme de différences présentant
• la différence entre la répartition de titane (430) et la distribution de titane (420) ; et
• la seconde différence entre la répartition des propriétés et la distribution des propriétés,
• positionnement des sections de corps en verre (400, 400', 400", 400‴) de sorte que, à l'étape de liaison (1500), les sections de corps en verre (400, 400', 400", 400‴) sont reliées selon la disposition optimale calculée.

9. Procédé selon la revendication 8, **caractérisé en ce que** la somme de différences est inférieure à 1,5 % par rapport à une somme d'une valeur maximale de la distribution de titane (420) et d'une valeur maximale de la distribution de propriétés, en particulier inférieure à 1,0 %, en particulier inférieure à 0,5 %.

10. Procédé selon au moins l'une des revendications précédentes, **caractérisé en ce que** l'étape de fabrication (1100) du corps en verre comprend au moins les étapes suivantes :
• création d'un corps en suie (200) poreux, le gradient de titane macroscopique dû à la fabrication s'étendant sensiblement le long d'un axe longitudinal et la structure en couches microscopique due au processus s'étendant sensiblement le long d'un axe de croissance,
• vitrification du corps en suie afin de créer le corps en verre cylindrique.

11. Procédé selon au moins l'une des revendications précédentes, **caractérisé en ce que** le premier composant en verre (600) est chauffé avant l'étape de rapprochement (1700).

12. Procédé selon au moins l'une des revendications précédentes, **caractérisé en ce que** la liaison (1500) est effectuée au niveau d'une surface de contact (401) respective des sections de corps en verre (400, 400', 400", 400‴).
